# EUROPÄISCHE PATENTSCHRIFT

(11) **EP 3 937 369 B1**
(45) Veröffentlichungstag und Bekanntmachung des Hinweises auf die Patenterteilung: **27.09.2023**
(21) Anmeldenummer: 21183167.2
(22) Anmeldetag: 01.07.2021
(51) Int. Cl.: H02S 20/32, F24S 25/10, F24S 30/452, F24S 40/80

(54) **VERTIKALE PHOTOVOLTAIKANLAGE**
VERTICAL PHOTOVOLTAIC SYSTEM
INSTALLATION PHOTOVOLTAÏQUE VERTICALE

(30) Priorität: 03.07.2020 DE 102020004021
(43) Veröffentlichungstag der Anmeldung: 12.01.2022
(73) Patentinhaber: Hepperle, Wilhelm, 89198 Westerstetten (DE)
(72) Erfinder: Hepperle, Wilhelm, 89198 Westerstetten (DE)
(74) Vertreter: Baur & Weber Patentanwälte PartG mbB

(56) Entgegenhaltungen:
- DE-U1-202015 103 505
- US-A1- 2008 264 474
- US-A1- 2011 041 834

## Beschreibung

Die Erfindung betrifft eine vertikale Photovoltaikanlage.

Aus der DE 20 2011 004 679 U1 ist eine vertikale PV-Anlage bekannt die jedoch mit zwei Motoren und elektronischer Steuerung arbeitet.

Die DE 20 2015 103 505 U1 zeigt eine Nachführeinrichtung für eine Photovoltaik-Anlage mit einer Leistung unter 2 kWp mit einem feststehenden Sockel, einem Modulträger, der um zumindest eine im Wesentlichen vertikale Achse relativ zum Sockel beweglich ist.

Die US 2011/041834 A1 zeigt eine zweiachsige Nachführvorrichtung für PV-Solarmodule. Insbesondere betrifft dieses Dokument eine schwerkraftzentrierte Nachführstruktur mit Einzel- oder Doppel-Linearaktuatoren, die an der Seite eines Bodenpfostens montiert sind, und eine Windsicherungsvorrichtung, die aktiviert werden kann, wenn ein starker Wind einen Schwellenwert überschreitet. Die Windsperrvorrichtung nutzt elektromagnetische Kraft, um den Solartracker in windneutraler Position fest auf dem Bodenpfosten mit zwei elektromagnetisch aktivierten Sperren zu verriegeln.

Erfindungsgemäß handelt es sich um eine vertikale Photovoltaikanlage, in weiterer Folge PV-Anlage genannt. Diese kann starr oder mit Elektro-mechanischem Antrieb zur Sonnenstand-Nachführung ausgeführt werden. Die Elektromechanische Steuerung besteht aus einem Antriebsmotor, der beispielsweise einen Mast mit Photovoltaik-Modulen, in weiterer Folge PV-Module genannt, im 24 Stunden Takt, also in 24 Stunden Uhrprinzip einmal um die vertikale Achse dreht. Damit wird dem täglichen Lauf der Sonne gefolgt.

Alternativ kann die PV-Anlage auch so gesteuert werden das sich die PV-Anlage nach Erreichen des Sonnenuntergangs wieder zurückstellt in die Position des Sonnenaufgangs, also eine Ost-West Drehung wird zurückgestellt mit einer West-Ost-Drehung. Dabei kann die PV-Anlage eine Ein-Achs-Steuerung oder eine Zwei-Achs -Steuerung besitzen. Die Ein-Achs-Steuerung dreht die PV-Anlage vom Sonnenaufgang zum Sonnenuntergang jahreszeitlich angepasst mit der mechanischen Steuerung oder einer üblichen elektronischen Steuerung und die zweite Achse steuert den Elevationswinkel der dem jeweiligen Sonnen-Einstrahlung-Winkel entspricht. Die jahreszeitliche Sonnennachführung sowie deren Justierung, entsprechend dem jeweiligen Breitengrad vom Standort der Anlage wird über eine mechanische Steuerung realisiert oder ebenfalls über eine übliche elektronische Steuerung zur Sonnen Nachführung.

Die Anlage ist so konzipiert, dass diese von einem Handwerker oder auch talentierten Heimwerker ohne Hinzunahme von schwerem Gerät, wie Kran usw., aufgebaut werden kann. Die Anlage soll des Weiteren in einzelnen Mastabschnitten leicht transportierbar und zu montieren sein. Die Anwendung ist auf jedem bebauten Grundstück möglich. Auf der Freifläche im Garten oder an der Wand- oder Dachmontage des Gebäudes, auch entlang von Verkehrswegen oder öffentlichen Parkplätzen. Anwender sind solche, die entweder eine übliche Dach-Photovoltaik-Anlage erweitern wollen oder solche, die eine Dach- oder Wand-Anlage nicht wollen oder nicht realisieren können.

Des Weiteren ist es möglich die vertikale PV-Anlage auch entlang von Verkehrswegen anzuordnen. Dies ist ohne zusätzlichen Flächenbedarf zum Beispiel an Straßenrändern möglich.

Der viel diskutierte und kritisierte, zeitweise auch gedeckelte Flächenbedarf für die bekannten Solarfelder kann durch die vertikale Anordnung deutlich reduziert werden. Deshalb ist eine weitere wesentliche Anwendung die Agro-Photovoltaik, im weiteren APV genannt. Für die APV Anwendung stehen sehr große Flächenpotenziale zur Verfügung. Sie ermöglicht einen Doppelnutzen der Agrarflächen weitestgehend ohne Einschränkung. Der Doppelnutzen besteht darin das sowohl die Agrarfläche weiter genutzt wird und außerdem Grüner Strom erzeugt wird als erneuerbare regenerative Energie. Des Weiteren besteht der Vorteil, dass diese Agrarflächen weiterhin als solche rechtlich gelten und dementsprechend subventioniert werden, was bei den heute üblichen Solarfeldern oder Solarparks nicht der Fall ist. Durch diese APV Anwendung ist also das Konfliktpotential zwischen wertvollem Flächenverbrauch und der Erzeugung erneuerbarer Sonnenenergie gelöst. Bei dieser APV Anwendung werden pro Flächeneinheit mehrere PV-Anlagen installiert mit einem großen Abstand zueinander, in einem konkreten Beispiel ist der Abstand ca. 20 m. Dies ergibt pro Hektar 36 PV-Anlagen. Da die PV-Anlagen in die Höhe gebaut sind mit mehreren Modulreihen übereinander lässt sich ein Stromertrag bis in etwa gleicher Menge wie auf Solarparks erzielen. Je nach Anzahl der PV Modulreihen sowie den jeweiligen Modulflächen pro Reihe die übereinander angeordnet sind. Des Weiteren eignet sich die vertikale Anordnung auch für Parkplatz-PV. Hier bietet die Anordnung den entscheidenden Vorteil, dass diese kostengünstiger ist als Überdachungen. Auch auf Flachdächern ist eine sinnvolle Anwendung möglich. Des Weiteren auf Gewässern, auch Floating-PV genannt.

Die Gesamthöhe einer PV-Anlage mit vier Modulreihen beträgt zum Beispiel ca. 10-12 m. Der Gesamtertrag wird nach dem Stand der Technik durch eine Ein-Achs-Steuerung um ca. 30% und durch eine Zwei-Achs-Steuerung um bis zu 50 % erhöht bei Verwendung von bifazialen PV-Modulen.

Die PV-Anlage besteht zunächst aus einer Stützkonstruktion oder einem Fundament. Die Stützkonstruktion oder das Fundament trägt einen Leichtbaumast. Dieser Leichtbaumast ist in Mastabschnitten unterteilt. Dadurch kann eine variable Anzahl von Mastabschnitten in die Höhe gebaut werden. Dabei ist jeder zweite und weitere Mastabschnitt mit mindestens zwei symmetrisch, also beidseitig, in einer Ebene angeordneten PV-Module, bestückt. Bezüglich der PV - Module sind alle marktüblichen Lösungen denkbar. Starre Module sowie solche, die als Dünnschicht-Module, beispielsweise CIGS-Module, auf Folien produziert sind. Diese haben im Wesentlichen den Vorteil eines signifikant geringeren Gewichts, sind flexibel und haben bevorzugt keine toxischen Bestandteile. Entscheidend für die Auswahl zum jeweiligen Stand der Technik ist hier primär die Wirtschaftlichkeitsberechnung, also die Amortisation der gesamten Anlage im Verhältnis zur Investition unter Einbeziehung des jeweiligen Strom-Ertrags der Anlage. Besonders vorteilhaft sind die PV-Module leichter Ausführung, also mit möglichst geringem Gewicht. Die Leichtbau PV-Module sind derart aufgebaut, dass diese aus beispielsweise einem Kunststoffteil oder einer Blechplatte besteht, welche die Fläche bildet, auf die eine extrem leichte Dünnschicht-PV-Folie aufgebracht wird. Diese Platte hat Trägerfunktion und übernimmt auch die Steifigkeit des Leichtbaumoduls. Alternativ sind bifaziale PV-Module einzusetzen, da diese besonders hohe PV-Stromerträge durch ihre zweiseitige Wirkung ermöglichen. Dabei ist das PV-Modul asymmetrisch oder symmetrisch an dem jeweiligen Wellenstummel positioniert. Die asymmetrische Anordnung wird angewendet, wenn die Module auch senkrecht stehen können, die symmetrische Anordnung wird dann bevorzugt, wenn die Module einen gewissen Elevationswinkel nicht unterschreiten können.

Der Leichtbaumast besteht zunächst aus einem ersten Mastabschnitt, der starr beispielweise mit einem Fundament verbunden ist. Die Höhe des ersten Mastabschnitts ist variabel und richtet sich nach den Erfordernissen der entsprechenden Anwendung. So kann die Höhe von ca. 0,5 m bis zu 2,5 m betragen bei beispielsweise Parkplatz-Anwendungen. Eine günstige Höhe ist ca. 2 m, da in diesem Fall auch Mais oder Korn oder Wein angebaut sein kann. Die geringere Höhe eignet sich für beispielweise Wiesenflächen oder Flachdach-Anwendungen. Die Höhe bezieht sich dabei auf den Abstand zum Grund. Der erste Mastabschnitt beinhaltet auch ein Gehäuse. In diesem ist der Motor mit Getriebe angeordnet bei PV-Anlagen mit Ein- oder Zwei-Achs-Steuerung zur Sonnennachführung. Bei Parkplatz-Anwendung kann in diesem Gehäuse auch die Ladeinfrastruktur für E-Mobile integriert sein was den Vorteil bildet, dass Kostensynergien entstehen.

Der Leichtbau-Mast besteht in seiner Erstreckung in die Höhe aus mindestens drei röhrenförmigen Elementen, die an ihrem jeweiligen oberen Ende mit einem Flansch fest verbunden werden und in weiterer Folge an der Oberseite des Flansches die Aufnahmekontur für die nächsten drei röhrenförmigen Elemente vorhanden ist. Das heißt ein Mastabschnitt besteht bei Ausführung mit veränderlichem Elevationswinkel der PV-Module immer aus einem Flansch, einer darin gelagerten drehbaren Welle, an die symmetrisch beidseitig des Mastabschnitts mindesten ein PV-Modul angeordnet ist. Außerdem besitzt jeder Mastabschnitt einen Schwenkhebel, der an anderer Stelle beschrieben wird. Bei der Ausführung ohne Elevation, also bei starr angeordneten Modulen wird zwischen den Mastabschnitten ein Knoten vorgesehen, der anstatt der drehbaren Welle einen beidseitigen starren Träger besitzt zur Aufnahme der Module. Der Mast kann dabei in der Höhenerstreckung senkrecht ausgeführt sein, aber auch mit einem gewissen Winkel schräg aufgebaut werden. Bezogen auf die Strahlrichtung der Sonne immer größer 90 Grad. Die Mastabschnitt-Konstruktion erlaubt somit eine variable Masthöhe zu erzielen und in weiterer Folge eine variable Gewinnung von elektrischem Strom. Alternativ kann der Mast auch einteilig ausgeführt werden als zweiter Mastabschnitt, der auf den ersten Mastabschnitt aufgesetzt wird. Dabei können ebenfalls mehrere Reihen PV-Module übereinander angeordnet werden. In diesem Fall bildet der Abstand der PV-Module zueinander die Mastabschnitte. Der Abstand der PV-Modulreihen ist variabel. Die elektrische Leistung eines kompletten Masten wird also mit jedem weiteren Abschnitt erhöht.

Zur Begrenzung der Biegekräfte auf den Mast, ab einer festzulegenden Windgeschwindigkeit, ist ein Drehmoment-Begrenzungs-Element vorgesehen. Das durch Windkraft erzeugte Drehmoment auf die PV-Module wird damit begrenzt. Dabei sind die PV-Module asymmetrisch an dem jeweiligen Wellenstummel positioniert bei senkrechter Anordnung der Module werden die Module mit einem entsprechenden Elevationswinkel schräg gestellt werden diese symmetrisch angeordnet. Das Drehmoment-Begrenzung-Element wirkt dabei in beide möglichen Drehrichtung der Rotationsachse. Wird das vorgegebene Drehmoment überschritten, stellt sich das PV-Modul soweit in den Wind, bis das vorgegebene Drehmoment erreicht wird. Das heißt die Module sind in jedem Fall drehbar an einem Wellenstummel gelagert. Damit ist gewährleistet, dass eine maximale festzulegende Biegekraft, auf Welle und Mast, nicht überschritten wird. Dies ermöglicht, dass alle Elemente entsprechend leicht ausgeführt werden können. Bezüglich der Windstabilität ist die symmetrische, gegenüberliegende Anordnung der PV- Module eine günstige Anordnung. Die Windkräfte, die ein Drehmoment auf den Mast bewirken, heben sich weitgehend auf. Dies wirkt sich besonders positiv auf die Antriebseinheit auf, die dadurch keine großen Drehmomente kompensieren muss.

Elektrische Energie aus Sonnenstrahlung wird im Wesentlichen durch fest angeordnete PV-Module gewonnen. Auf Dachflächen, Wandflächen oder auf PV-Modulfeldern, wobei die PV-Modulfelder einen hohen Flächenbedarf beanspruchen, der nicht beliebig erweiterbar ist. Diese PV-Module erzeugen pro Flächeneinheit eine durchschnittliche elektrische Leistung, die in etwa 30-50% unter der möglichen Leistung pro Flächeneinheit liegt, wenn die Solarmodule dem Lauf der Sonne nachgeführt werden. Neuere PV-Modulfelder sind zwar in einer Achse schwenkbar. Eine Zweiachs-Lösung ist jedoch nicht machbar. Außerdem gibt es große Mastanlagen mit Ein- oder Zweiachs-Steuerung. Bei diesen Anlagen sind die PV-Module jedoch nicht übereinander angeordnet, sondern tischartig mit einer schwenkbaren Ebene. Daraus resultieren extrem hohe Windlasten, die von der gesamten Anlage aufgenommen werden müssen. Zur Steuerung gibt es verschiedene Systeme wie astronomische Steuerung, oder Sensor Steuerungen, die der Helligkeit am Himmel folgen. Diese sind alle sehr teuer, außerdem wird ein hoher erzeugter Stromanteil für die kinetische Energie für die Sonnenstand-Nachführung verbraucht. Die Anlagen sind schwer gebaut und müssen aufwändig mit schwerem Gerät an Ort und Stelle aufgebaut werden. Starre und sonnennachgeführte PV-Anlagen besitzen Sogenannte Starkwind/Sturm Sicherungen, welche die Module im Wesentlichen waagrecht stellen, um die Windlast zu reduzieren und überhaupt beherrschbar zu machen. Diese benötigen jedoch eine Messeinrichtung die ein Signal an Bspw. Einen Elektromotor oder eine Hydraulikanlage leiten. Das heißt jetzt wird der Schwenk-Vorgang gestartet Das verbringen in eine sichere Position bedarf also einer gewissen Zeit. Plötzlich auftretende Windböen könne mit diesen Systemen nicht beherrscht werden. Deshalb müssen solche Anlagen für sehr hohe Windgeschwindigkeiten deutlich über 100 km/h bis zu 200 km/h dimensioniert werden. Dies erhöht die Kosten und die eingesetzten Massen und die Befestigung der Anlagen am entsprechend dimensionierten Fundament erheblich da die Windlast durch die Windgeschwindigkeit im Quadrat zunimmt. Außerdem sind diese Systeme Wartungs-intensiv und erzeugen dadurch Kosten und Störungen. Die Flächen an Häusern, Dach und Wand sind ebenfalls begrenzt. Zur Dachmontage ist ein Gerüst erforderlich sowie eine aufwendige Befestigung für die PV-Module. In den meisten Fällen ist die Dachausrichtung nicht optimal Richtung Süden gegeben, mit der Folge das der erzielte Wirkungsgrad reduziert wird. Außerdem können diese Solaranlagen in aller Regel nicht der Sonne-Nachgeführt werden. Ein weiterer Nachteil ist die schlechte Wärmeabfuhr zwischen PV-Modul und Dach, was vor allem im Sommer zu erheblichen Ertragsverlusten führt. Dies führt dazu, dass die gewonnenen Strommengen oft 50 % und mehr unter der technischen Möglichkeit liegen.

Der Erfindung liegt die Aufgabe zugrunde eine vertikale Leichtbau-Photovoltaik-anlage gemäß Anspruch 1 aufzuzeigen. Dabei kann die Anlage als starre PV-Anlage ohne Sonnen-Nachführung oder aber mit einer Ein-Achs-Steuerung oder Zwei-Achs-Steuerung ausgestattet werden mit einer elektromechanischen Steuerung zur Sonnenstand-Nachführung. Die Anlage ist so ausgelegt, dass der maximal mögliche Wirkungsgrad der PV-Module am Jeweiligen Standort und je nach Anlagenausführung, APV- oder Einzelanlage, erwirtschaftet wird. Dabei wird immer das Kosten/Nutzen Verhältnis berücksichtigt. Des Weiteren soll die Anlage von Heimwerkern oder Handwerkern ohne schweres Gerät und Gerüst aufzubauen sein. Um niedrige Gesamtkosten, den optimalen Wirkungsgrad und die einfache Montage sowie den einfachen Transport zu gewährleisten wird die Anlage auf möglichst leichte Ausführung konzipiert. Des Weiteren werden wirkende Wind- oder Sturmkräfte signifikant reduziert, um dem Anspruch der besonders leichten Konstruktion gerecht zu werden. Dies bietet in weiterer Folge auch den erheblichen Vorteil, dass die Befestigung der Mastanlage am Dach oder der Hauswand oder am Fundament deutlich weniger Kräfte aufnehmen muss und somit wesentlich einfacher und kostengünstiger realisierbar ist.

Der Mast besteht zunächst aus einem Ersten Mastabschnitt mit variabler Höhenerstreckung bezogen auf den Grund. Dieser Mastabschnitt ist starr und senkrecht am beispielsweise Fundament befestigt.

Dem ersten Mastabschnitt ist auch der Antrieb mit Gehäuse, Motor, Getriebe und Antriebswelle mit Adapter zugeordnet. Am oberen Ende ist der erste Mastabschnitt an der Antriebswelle mit Adapter mit einem Flansch fest verbunden, der den zweiten Mastabschnitt aufnimmt. Der Mast besteht also mindestens aus einem ersten Mastabschnitt und einem weiteren Mastabschnitt. Dabei sind der und die weiteren Mastabschnitte ebenfalls senkrecht oder aber auch schräg aufgesetzt sein. Die Schrägstellung des /der weiteren Mastabschnitte ist in die Richtung geneigt das zwischen Grund und Neigung ein stumpfer Winkel entsteht. Also beispielsweise 90 Grad plus 20 Grad. Dabei ist die Sonnenstrahlung immer so angeordnet das diese von der Seite auf die PV Anlage wirkt, die den stumpfen Winkel bildet, also beispielsweise 110 Grad. Zwischen jedem Mastabschnitt ist ein Flansch angeordnet, der den jeweiligen Mastabschnitt aufnimmt. Im Flansch ist jeweils eine horizontale Welle gelagert zur Aufnahme von beidseitig symmetrisch angeordneten PV-Modulen.

Bei einteiligem Mast können die Mastabschnitte durch den Abstand der PV-Modul-Reihen gebildet werden. Dabei wird die jeweilige Welle mit Wellenstummel oder der starre Träger mit einer geeigneten Vorrichtung am Mast befestigt.

Bei APV Anlagen oder sonstigen größeren Anlagen ist der Abstand der PV- Anlagen so zu wählen das einerseits eine weitestgehende uneingeschränkte Bearbeitung der Agrarflächen gewährleistet wird und andererseits eine geringe oder keine Verschattung von einer PV- Anlage zur nächsten erfolgt. Hierbei resultiert zwischen dem Abstand der PV-Anlage und der Oberkante des höchsten PV-Moduls oder der PV-Modul Reihe der Winkel, der den Verschattung freien Bereich bildet. So ist es durchaus akzeptabel, dass der Verschattung freie Bereich bei ca. 20 Grad Sonnenstandwinkel nach Sonnenaufgang beginnt und 20 Grad vor Sonnenuntergang endet. Alternativ ist es auch möglich mit diesem Winkel die Drehung des Masten bei Sonnenaufgang zu starten beziehungsweise am Abend zu beenden. Dabei wird der Winkel so lange nicht mit der Steuerscheibe der mechanischen Steuerung verändert bis der Sonnenstandwinkel erreicht ist. So können in der Praxis zum Beispiel 36 PV-Anlagen pro Hektar mit einem Abstand von etwa 20 Metern und einer maximalen Masthöhe von ca. 10-12 Metern realisiert werden. Dabei kann sich eine Gesamtspannweite der jeweiligen Modulreihen bis nahezu 20 Metern realisieren lassen, wobei die SymmetrieAchse von Mastabschnitt eins mit Antriebswelle, die in etwa die Mitte bildet.

Der Abstand der einzelnen Mastabschnitte MA kann variabel gewählt werden. Dabei ist der Sonnenhöchststand am jeweiligen Aufstellungsort der PV- Anlagen im Zusammenwirken mit den Jahreszeiten ebenfalls stark veränderlich. Der Mastabstand bezieht sich dabei auf den senkrechten Abstand zum Grund. Um die Gesamthöhe der jeweiligen PV-Anlage einerseits so niedrig wie möglich zu halten und andererseits den Sonnenhöchststandwinkel durch Schwenken, also der Elevation der PV-Module zu ermöglich, kann es sinnvoll sein, den zweiten und die weiteren Mastabschnitte schräg zu stellen. Dadurch wird ein höherer Sonneneinstrahlungswinkel ohne Verschattung der PV-Module bei kleinerem Mastabstand realisierbar. Alternativ ist es auch möglich den Schwenkwinkel der PV- Module zu begrenzen auf beispielsweise 60 Grad Sonnenstandwinkel. Dies führt zu einem zu vernachlässigenden Ertragsverlust da der Sonnenhöchststand nur an einem Tag im Jahr, am 21. Juni erreicht wird und zudem die Ertragsverluste dadurch bekannterweise sehr gering sind. Dabei ist es möglich die Steuerscheibe der mechanischen Steuerung so zu gestalten, dass dies realisiert wird.

Der zweite und die weiteren Mastabschnitte besteht aus mindestens drei röhrenförmigen Elementen, die die Höhenstreckung des Mastabschnitts erzeugen. Der Mast ist also in seiner Höhe variabel mit einer entsprechenden Skalierung aufgebaut. Der zweite Mastabschnitt besteht aus einem Flansch, der die mindestens drei röhrenförmigen Elemente aufnimmt. Dabei sind diese mit dem Flansch fest verbunden. Dieser Flansch bildet auch die Schnittstelle zu der elektro-mechanischen Steuerung mit Antriebswelle und mit Steuerscheibe bei PV-Anlagen mit Ein- oder Zweiachs-Steuerungen, also mit Mastabschnitt 1. Das heißt an der Schnittstelle ist der erste Mastabschnitt und der zweite Mastabschnitt mit dem elektrischen Antrieb gekoppelt, um die Rotation des Masts zu realisieren. Eine mechanische Steuerung mit Steuerscheibe ist zwischen Gehäuse und Adapter mit Antriebswelle angeordnet. Der Adapter wird mit dem Flansch drehfest verbunden. Am oberen Ende der drei röhrenförmigen Elemente wird ein zweiter Flansch angeordnet und mit diesen fest verbunden. Der Flansch besitzt in horizontaler Anordnung die Aufnahme und Lagerung einer drehbaren Welle welche beidseitig, symmetrisch, aus dem Flansch herausragt. Diese Wellenstummel nehmen beidseitig mindestens ein PV-Modul auf. Des Weiteren ist diese Welle mit einem Schwenkhebel verbunden, dessen Funktion später beschrieben wird. Darüber hinaus besitzt der Flansch die Aufnahme für mindestens drei weitere röhrenförmige Elemente, die ebenfalls mit dem Flansch fest verbunden sind.

Diese röhrenförmigen Elemente besitzen wiederum an ihrem oberen Ende einen Flansch. Das heißt diese Mastabschnitte können beliebig in der Höhe erweiterbar sein bis zu einer gewissen statisch beherrschbaren Höhe. Es können also mehrere Mastabschnitte mit Schwenkhebel und Welle eine variable Höhe erreichen, wobei die erzeugten elektrischen Leistungen sich addieren. Wie schon beschrieben ist der Abstand der Mastabschnitte auch an einem einteiligen zweiten Mastabschnitt möglich. Dabei ist die Welle oder die Wellen entsprechen am Mast befestigt.

Bei Masten aller Art ist die Wind- bzw. Sturmsicherheit ein wichtiges Konstruktionsmerkmal. Bei dieser vertikalen PV-Anlage sind im Wesentlichen zwei Maßnahmen vorgesehen, die die Wind-/Sturmkräfte beherrschbar machen bei gleichzeitig extrem leichter Ausführung. Es gibt im Wesentlichen zwei Kräfte, die durch Wind/Sturm entstehen und zu beherrschen sind. Zum Ersten sind dies Rotationskräfte, die entstehen können, um die senkrechte Achse des Mastes. Also Kräfte, die auf die Antriebseinheit als Drehmoment wirken, die diese Kräfte kompensieren muss. Und zum Zweiten Kräfte, die auf die Planfläche der PV- Module wirken, je nach tageszeitlicher Winkelstellung oder auf den festgelegten Winkel. Besonders hoch sind diese Kräfte, wenn die Module nahezu senkrecht oder senkrecht stehen. Die aus der Windlast resultierenden Kräfte müsse vom PV-Modul über die Befestigung der PV-Module aufgefangen werden. Des Weiteren müssen Biegekräfte von dem Mast selbst und dessen Befestigung sowie der Antriebswelle und Mastabschnitt 1 bis zum Fundament aufgefangen werden.

Die erste Maßnahme, also die Rotationskräfte zu beherrschen, wird im Wesentlichen durch die symmetrische, also beidseitige, im Wesentlichen horizontale Anordnung der PV-Module erreicht, da sich die Drehmomente resultierend aus Wind-/ Sturmkräfte gegenseitig aufheben. Die zweite Maßnahme, also die Biegekräfte, die auf den Mast und dessen Befestigung und Lagerung wirken, können signifikant reduziert werden, in dem die PV-Module mit einem Element an der Welle so befestigt und schwenkbar gelagert sind, dass diese ab einer gewissen Windstärke durch Drehung um die Welle sich in den Wind stellen können. Dafür ist ein Drehmoment-begrenzungs-Element vorgesehen, damit können die Windkräfte größer einer definierten Windstärke signifikant reduziert werden. Dieses Drehmomentbegrenzungs-Element kann beispielsweise aus zwei Schenkelfeder bestehen, die zwischen Wellenstummel und PV-Modul in beide Drehrichtungen der PV-Module wirken. Dabei ist jeweils ein Schenkel der Feder drehfest mit dem Trägerelement angeordnet, welches das PV-Modul aufnimmt. Das Trägerelement ist dabei schwenkbar an Wellenstummel gelagert. Der zweite Schenkel der jeweiligen Feder ist dabei drehfest an dem Wellenstummel angeordnet. Da starke Winde/Stürme relativ selten stattfinden wird vorgeschlagen die Kräfte beispielsweise so zu dimensionieren, dass sich die PV-Module ab einer Windstärke von etwa 60 km/h in den Wind stellen. Damit wird vermieden, dass der Mast Sturmkräfte mit bis zu Beispielsweise 160 km/h widerstehen muss. Die PV-Module sind dabei um einen gewissen Betrag außermittig, asymmetrisch, am Wellenstummel angeordnet. Damit wird gewährleistet, dass ein Drehmoment entsteht, das gegen das entsprechende Drehmoment -begrenzungs-Element wirkt unabhängig von der Windrichtung. Diese Anordnung ist insbesondere dann anzuwenden, wenn die PV-Module eine senkrechte Position, zumindest temporär, besitzen In einer anderen Version können die PV Module pro Wellenstummel mit dem Trägerelement gemeinsam befestigt und am Wellenstummel gelagert werden. Das heißt ein langes Trägerelement nimmt alle PV-Module pro Wellenstummel auf. In dieser Version kann ein Schenkelfeder Paar ausreichen, um die gesamte PV-Modulreihe in deren Lage zu fixieren und bei Beispielsweise 60 km/ in den Wind zu stellen. Wenn die PV-Module einen Elevationswinkel vorgegeben haben, also niemals senkrecht stehen können, ist es alternativ möglich, dass das Drehmoment-begrenzungs- Element aus beispielsweise nur einer Schenkelfeder besteht da in diesem Fall unabhängig von der Windrichtung nur eine Drehrichtung der PV-Module möglich ist. Andere technische Lösungen zur Drehmoment Begrenzung der PV-Module sind möglich. Die beiden Maßnahmen zur Reduktion der Rotations- und Biegekräfte leisten einen erheblichen Beitrag, um die gesamte Mastkonstruktion mit oder ohne elektrischen Antrieb möglichst leicht, also mit geringem Gewicht und Materialeinsatz zu realisieren. Einen wesentlichen Beitrag leistet zum Leichtbau der Mastkonstruktion die mindestens drei röhrenförmigen Elemente zur Erzielung der Höhenerstreckung des Masts, wie schon beschrieben da diese üblicherweise mit einem einzelnen röhrenförmigen Element realisiert sind, mit einem entsprechenden Mindestdurchmesser. Dadurch, dass man die mindestens drei röhrenförmigen Elemente in ihrem radialen Hüllkreis -Durchmesser größer anordnen kann bei geringerem Materialeinsatz wird auch in sich die Mastkonstruktion in der Leichtbauweise realisierbar und optimiert.

Die Sonnen Nachführung-Steuerung besteht aus einem Antrieb, bestehend aus Motor, Getriebe und Antriebswelle mit Adapter zur Aufnahme vom zweiten Mastabschnitt, mit einer Umdrehung pro Tag in 24 Stunden Uhrgenauigkeit. Alternativ kann die Anlage auch so gesteuert werden, dass diese sich nach Erreichen des jeweiligen Sonnenuntergangs wieder in die Sonnenaufgang Position zurückstellt. Also eine Ost -West Drehung wird zurückgestellt durch eine West-Ost Drehung. Dieser Antrieb ist unterhalb des zweiten Mastabschnitt am Mastabschnitt eins drehfest angeordnet. Der Antrieb dreht den zweiten Mastabschnitt und gegebenenfalls weitere Mastabschnitte um seine vertikale oder schräg stehende Achse. Dabei wird der Mast in die Richtung schräg gestellt, dass der Winkel während der Ost West Drehung von der Sonnenseite aus betrachtet immer um den Winkel-Betrag der Schrägstellung größer ist als 90 Grad. Das heißt der Abstand zur Sonne ist an der Mastspitze größer als am unteren Mastabschnitt. Diese Schrägstellung wirkt sich besonders günstig auf die Höhenerstreckung der PV-Anlage aus. Die Höhen der Mastabschnitte können kleiner gewählt werden ohne Verschattung Nachteile. Des Weiteren wird die Gesamthöhe der PV Anlage deutlich reduziert. Zwischen dem Gehäuse und dem Adapter ist eine mechanische Steuerung in Mastabschnitt eins angeordnet die zum einen den jahreszeitlichen Verlauf des Sonnenstands nachführt, zum anderen ist eine Einrichtung vorhanden, die es ermöglicht die Anlage entsprechend des Orts, an dem diese installiert wird, bezogen auf den jeweiligen Breitengrad, aus dem der jeweilige Sonnenstandwinkel verlauf resultiert zu justieren und zu fixieren. Dabei wird die mechanische Steuerung drehfest am Gehäuse angeordnet. Die mechanische Steuerung besteht zunächst aus einer in der horizontalen Ebene verschiebbaren Steuerscheibe. Dabei wird die Steuerscheibe mit ihrer schiefen Ebene so ausgerichtet, dass der höchste Punkt also der Scheitelpunkt der Steuerscheibe exakt nach Süden auf der Nordhalbkugel der Erde zeigt. Diese Position entspricht jeweils dem höchsten Sonnenstand des Tages, 12 Uhr mittags. Die horizontale Verschiebung, geographisch bestimmt um 2x22,5°=45°, bildet damit den Lauf der Sonne über die Jahreszeiten ab. Es ist bekannt, dass sich die Erde einmal im Tag um die eigene Pol-Achse dreht. Dadurch, dass die Erde mit ihrer Pol-Achse um 22,5° schräg steht zur Jahresumlaufbahn um die Sonne, resultieren die Jahreszeiten (22,5 Grad sind aktuell 23,4 Grad, weil die Erdachse sich verändert).

Diese horizontale Verschiebung wird vom 21. Dezember eines Jahres in sechs Monaten bis zum 21. Juni eines Jahres abgebildet, wobei die Zeit vom 21. Juni bis 31. Dezember wieder in umgekehrter horizontaler Richtung zurückgestellt wird. Diese horizontale Verschiebung kann zum Beispiel in sechs Schritten (Monaten) von Hand, einmal pro Monat vorgenommen werden. Die dadurch entstehenden Winkelfehler gegenüber einer täglichen Nachführung sind in der Praxis zu vernachlässigen. Diese Anordnung erlaubt einen elektromechanischen Betrieb der Anlage mit nur einem motorischen Antrieb mit einer Zweiachs-Sonnen-Nachführung. Die manuelle Nachstellung ist insbesondere für Einzelanlagen im privaten Bereich sinnvoll. Alternativ kann der jahreszeitliche Verlauf auch automatisiert werden. Dies ist besonders bei größeren, beispielsweise APV-Anlagen, sinnvoll.

Dabei wird zunächst der Antriebswelle ein Steuernocken zugeordnet der drehfest mit der Antriebswelle verbunden ist. Dieser Steuernocken greift in ein erstes Rad eines Schrittgetriebes ein, welches einmal am Tag um einen Schritt also einen gewissen Winkelbetrag gedreht wird. Dieses Schrittgetriebe Rad besitzt ein Abtriebs Rad, das mit einem weiteren Rad zusammenwirkt. Dieses Rad besitzt einen außerhalb des Rad Mittelpunkts angeordneten Steuerzapfen. Die Gesamtübersetzung des Getriebes ist so ausgelegt, dass das zweite Rad mit Steuerzapfen sich einmal im halben Jahr um 180 Grad dreht, also in 182 Tagen. Der Steuerzapfen greift in eine Kulisse ein, die eine Steuerkurve besitzt. Dabei ist die Steuerkurve so auszulegen das mit der Drehung um 180 Grad ein Halbjahr abgebildet wird. Dazu führt der Steuerzapfen bei einer 180 Grad Drehung einen Hub der Kulisse aus, der der erforderlichen Längsbewegung "L" entspricht um die die Steuerscheibe horizontal verschoben werden muss im Halbjahr. Dabei ist die Kulisse mit einem Steuerfinger ausgestattet der fest mit der Steuerscheibe verbunden ist und somit die Längsbewegung auf die Steuerscheibe überträgt. Durch die Weiterdrehung um weitere 180 Grad wird der Steuerfinger mit Kulisse wieder zurück geführt in den weiteren 182 Tagen. Auf eine Korrektur des Schaltjahres wird bewusst verzichtet da dies langjährig zu einem so geringen Fehler führt das dieser vernachlässigbar ist.

Es ist bekannt und Stand der Technik, dass es Sonnen-Nachführungs-Systeme, die in aller Regel aus zwei Antrieben mit Getrieben bestehen, mit entsprechender Software und Sensoren zur Nachführung gibt. Diese Systeme sind teuer und störungsanfälliger als mechanische Systeme. Vor diesem Hintergrund wurde diese Steuerung entwickelt, die mit nur einem Motor eine Zweiachs-Steuerung ermöglicht die elektromechanisch konzipiert ist, wartungsfrei und langlebig bei geringsten Kosten. Hinweis: Wird auf die Steuerung zurückgegriffen, die von Ost nach West und wieder zurückgedreht wird, wird der Steuernocken an der Antriebswelle so ausgeführt, dass dieser sich in einer Drehrichtung zurückstellt und das Schrittgetrieberad nicht zurückgedreht wird.

Die Anordnung der Elektro-mechanischen Steuerung mit Antriebswelle ist Bestandteil jeder einzelnen PV-Anlage mit Sonnen Nachführung. Der erste Mastabschnitt ist dabei so aufgebaut das bei PV Anlagen, die zunächst ohne Ein- oder Zweiachs-Steuerung ausgeführt werden jederzeit nachrüstbar sind mit Ein- oder Zweiachs-Steuerungen.

Die Motorsteuerung kann dabei jeder einzelnen PV-Anlage zugeordnet werden, aber auch eine Zentralsteuerung für mehrere PV-Anlagen ist möglich.

Die Steuerung ist so ausgeführt, dass neben den beschriebenen Ein- und Zwei-achs-Steuerungen, die intermittierend die Drehung ausführen kann, um geringste Stromaufnahme zu gewährleisten, weitere Funktionen zugeordnet werden. So ist zum Beispiel vorgesehen, dass die PV-Module zu jedem beliebigen Zeitpunkt in eine vorgegebene Position geschwenkt werden können. Beispielsweise in die Senkrechtposition oder aber in die Position mit dem kleinsten Elevationswinkel, wenn das Feld bearbeitet werden soll oder geerntet werden soll. Des Weiteren lassen sich die PV-Anlagen in Ihrer Drehrichtung nach einer Flucht ausrichten. Nach erfolgter Durchführung der Tätigkeit werden die PV-Modul und PV-Anlagen wieder in ihre richtige vorgesehene Position zur Stromernte verbracht.

Bezüglich der elektrischen Sicherheit ist die PV Anlage nach den jeweils üblichen Standards ausgeführt. Über der Höhe vom ersten Mastabschnitt kann zusätzlich unter der untersten PV-Modul Reihe ein Berührungs-Schutzvorrichtung angeordnet sein, die verhindert das man den PV-Modul/die Modul-Reihen berühren kann ohne fremde Hilfsmittel wie beispielsweise eine Leiter.

Die keilförmige, schiefe Ebene, also die Steuerscheibe ist so konzipiert, dass eine Schwenkung der PV -Module um 90° möglich ist, und zwar senkrecht bei Sonnenaufgang und waagrecht 12 Uhr mittags am Äquator. Die Steuerscheibe wirkt dabei mit einem vertikalen Steuer Element zusammen. Dieses Steuer Element ist drehbar mit mindestens einem Schwenkhebel der Welle verbunden, der durch Drehung der Welle die PV-Module schwenkt. Dabei besitzt jeder Mastabschnitt einen Schwenkhebel, der mit dem Steuer Element zusammenwirkt.

Das Steuerelement ist in der senkrechten Achse ortsfest am Mast angeordnet. Durch die Drehung des Masts um 360° in 24 Stunden ergibt sich, dass das vertikale Steuer Element der jeweiligen Position der Steuerscheibe folgend sich im Tagesverlauf auf- und ab bewegt. Dabei wird durch die jeweilige niedrigste Position der Steuerscheibe Sonnenaufgang und Untergang abgebildet. Immer wenn der Sonnenaufgang beziehungsweise Untergang in der Drehung erreicht ist, verlässt das vertikale Steuer Element die Steuerscheibe. Das ermöglicht ein Weiterdrehen des Masts vom Sonnenuntergang bis zum nächsten Sonnenaufgang berührungslos, ohne Last. Das bewirkt, dass die benötigte Energie in diesem Zeitraum äußerst gering ist. Das vertikale Steuer-Element besitzt einen dafür geeigneten Anschlag, der bewirkt, dass das Steuer-Element in seiner tiefsten Lage positioniert ist. Die PV-Module stehen in diesem Zeitabschnitt in etwa senkrecht oder einem gewählten Winkel beispielweise 20 Grad.

Der vertikale Auf- und Abhub des vertikalen Steuer-Elements wird mit einer reibungsarmen Kugeldruck-Lagerung, die zwischen Steuer-Element und Steuerscheibe angeordnet ist, realisiert. Damit wird die Leistung des Antriebs in diesem Zeitabschnitt sehr klein gehalten. Mit dieser Anordnung ist eine jahreszeitliche Steuerung der Anlage realisiert.

Selbstverständlich kann diese horizontale Längsverschiebung der Steuerscheibe auch durch einen Motor erzeugt werden.

Wird auf die Steuerung mit Ost-West-Drehung und Rückstellung von West-nach Ost-Drehung zurückgegriffen wird der entsprechende Auf- und Abhub über die Steuerscheibe zwei Mal in 24 Stunden ausgeführt.

Um die Justierung der Breitengrade einerseits und die horizontale Längsverschiebung andererseits zu ermöglichen werden zunächst an der Steuerscheibe zwei Achszapfen angeordnet. Diese Achszapfen verlaufen mit der Drehachse durch den spitzen Schnittpunkt des keilförmigen Elements Steuerscheibe. Diese beiden Achszapfen werden in einer Längsführung gelagert, die der erforderlichen horizontalen Verstellung "L" der Steuerscheibe entspricht. In weiterer Folge ist an der Steuerscheibe eine Schwenk Vorrichtung angeordnet. Diese besteht aus einem Justier-Hebel, der fest mit der Steuerscheibe verbunden ist. Dieser Justier-Hebel wirkt mit einer Kulisse zusammen, die den Schwenk Winkel abbildet. Der Justier-Hebel wird entsprechend der geographischen Lage des Aufstellorts der Anlage geschwenkt und festgestellt/fixiert in der Kulisse. Dabei ist die Kulisse ebenfalls horizontal verschiebbar in einer Führung jedoch drehfest angeordnet. Damit kann bei horizontaler Längsverschiebung der Steuerscheibe die Kulisse sich ebenfalls horizontal synchron mitbewegen.

Bezüglich der PV-Module wird auf die Einleitung verwiesen. Bevorzugt wird eine Dünnschicht PV -Folie eingesetzt, insbesondere CIGS PV-Folien. Diese sind leicht und nicht toxisch. Andere PV -Module sind möglich. Durch den Einsatz von bifazialen Modulen kann der Ertrag nochmals im Wesentlichen durch Reflexions-Strahlung erhöht werden.

Der Abstand der Masten und die Höhe der Masten stehen in einem einfachen geometrischen Zusammenhang.

So lassen sich zum Beispiel bei einer PV Anlagenhöhe von 10 m und PV-Anlagenabstand von 20 m eine totale Verschattung Freiheit bei einem Sonnenstandwinkel von ca. 20 Grad realisieren. Da die Parameter Abstand und Höhe zueinander proportional sind können diese beliebig erweitert werden. Zum Beispiel PV Anlagenhöhe 50 m, bei PV Anlagenabstand 100 m. Des Weiteren können verschiedenste Anlagen konzipiert werden, beispielsweise sehr niedrige die ein oder 2 PV-Modulreihen besitzen, sowie auch solche die sich beliebig in die Höhe erstrecken. Die Begrenzung wird immer eine Kosten-Nutzen-Frage sein, sowie die Frage der örtlichen Möglichkeiten. So kann beispielsweise in weitem unbesiedelten Land durchaus eine PV-Anlage extremer Höhe sinnvoll sein oder in Industriegebieten ,wobei sich umgekehrt im AGRAR Bereich beispielsweise auf der schwäbischen Alb oder der PO Ebene in Norditalien kleinere, ggf. auch niedrig gehaltene Anlagen anbieten können.

Darüber hinaus spielt zum Beispiel bei AGRAR Anwendung auch ein bevorzugter Abstand vom Landwirt der PV-Anlagen zueinander eine große Rolle. Und als wichtiges Kriterium der Stromertrag der direkt von der Größe der installierten PV-Modulfläche und deren Wirkungsgrad sowie sonnen Nachführung abhängt.

So ist beispielsweise auch eine Anordnung an Überlandleitungen, parallel zum jeweiligen Leitungsmast eine günstige Ausführung und Anordnung da der Strom direkt ins Netz eingespeist werden kann.

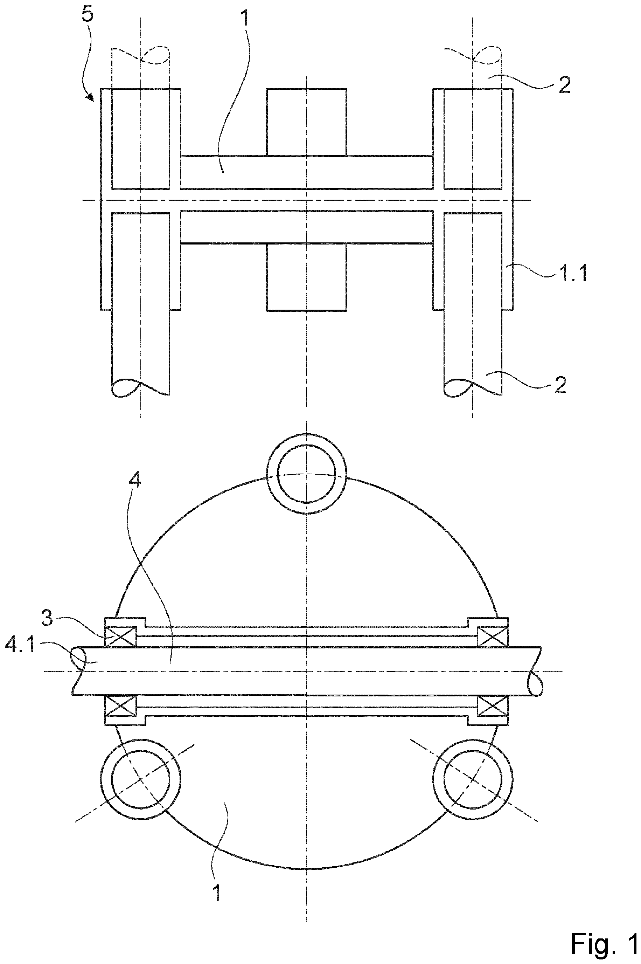

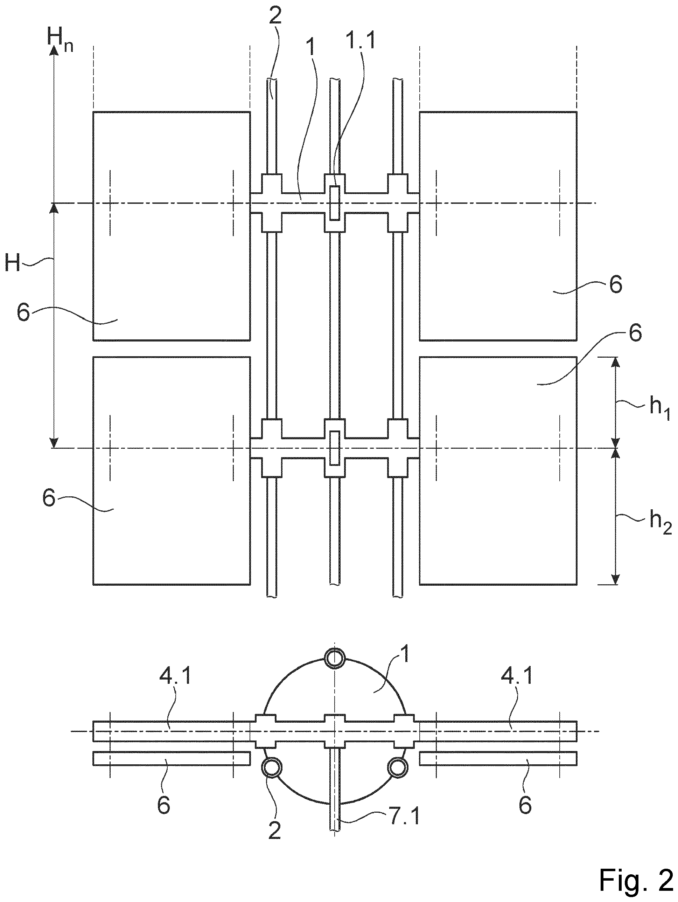

Figur 1 zeigt schematisch den konstruktiven Aufbau des Leichtbaumast. Dabei ist hier zunächst ein Mastabschnitt 5 dargestellt. Dieser besteht aus Flansch 1, der beidseitig mindestens drei Aufnahmekonturen 1.1 für die mindestens drei röhrenförmigen Elemente 2 besitzt. Diese Aufnahmekonturen1.1 werden jeweils mit den röhrenförmigen Elementen 2 bestückt und befestigt, wobei die röhrenförmigen Elemente 2 sich in die Höhe erstrecken. Des Weiteren besitzt Flansch 1 horizontal verlaufend die Aufnahme und Lagerung 3 von Welle 4, wobei beidseitig Wellenstummel 4.1 symmetrisch herausragen. Gestrichelt oben ist ein weiterer Mastabschnitt 5 dargestellt/angedeutet. Die Skalierung, siehe Figur 2, also die Höhe der entsprechenden Mastabschnitte 5 kann variabel gewählt werden entsprechend der jeweiligen PV-Modul 6 Größe.

Figur 2 zeigt beispielhaft in Skizzenform eine mögliche symmetrische Anordnung der PV-Module 6 an Wellenstummel 4.1 die beidseitig aus Flansch 1 symmetrisch herausragen. Dabei werden die PV-Module 6 außermittig in der Höhenstreckung mit h1;h2 angeordnet. Dies bewirkt bei aufkommendem Wind ein Drehmoment. Des Weiteren wird eine entsprechende Mastabschnittshöhe "H" dargestellt. Weitere Mastabschnitte" Hn" sind möglich.

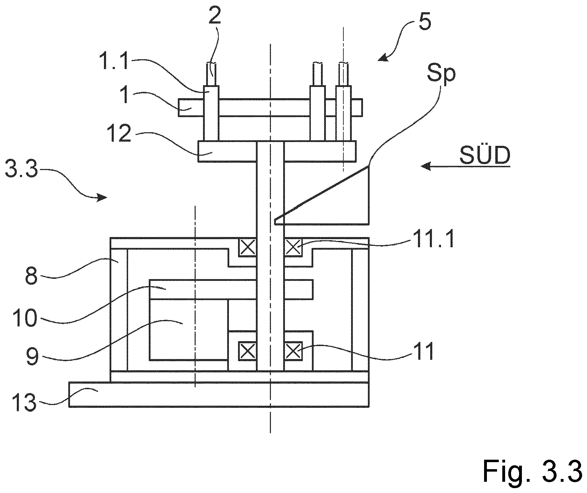

Dabei können die PV- Modul 6 auch quer angeordnet werden, oder auch beidseitig mehr als ein PV -Modul 6. Diese Varianten werden nicht dargestellt. Die Welle 4 besitzt einen Verschwenkhebel 7.1 der mit Steuer Element 15 zusammenwirkt siehe Figur 3.3 und die PV-Module 6 verschwenkt

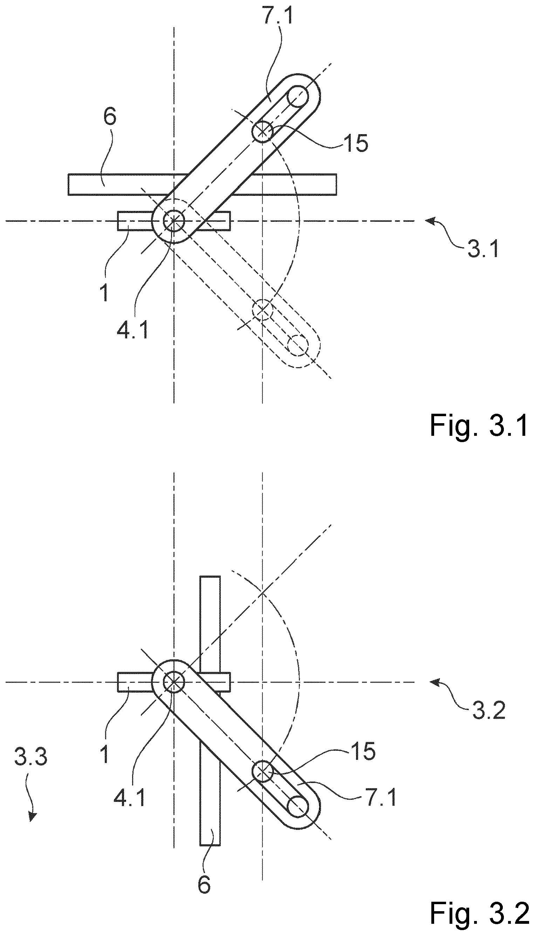

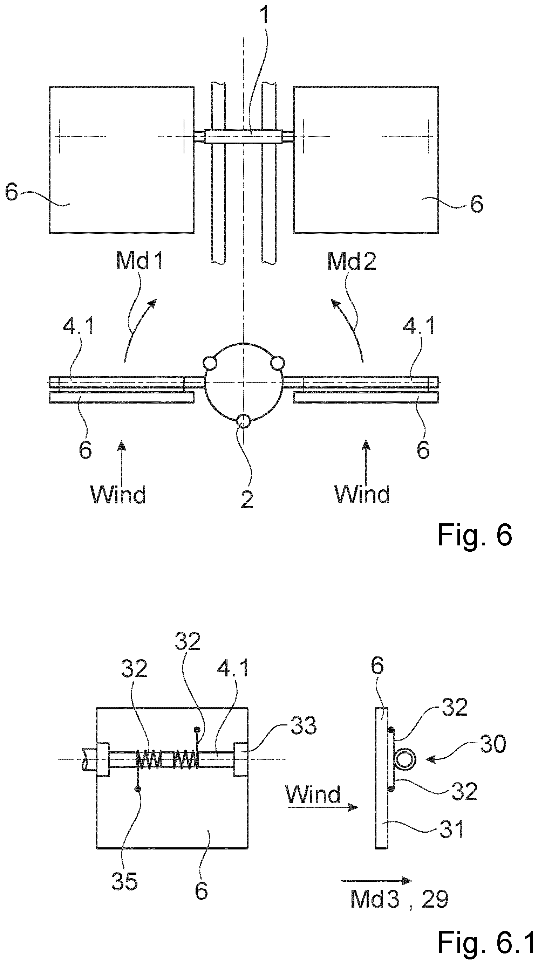

Figur 3 zeigt schematisch den zwei-achsigen elektromechanischen Antrieb der vertikalen PV-Anlage. Der Antrieb besteht aus einem Gehäuse 8. Der Antrieb ist Bestandteil vom ersten Mastabschnitt MA 5. Der starr am Fundament senkrecht angeordnet ist. Darin ist der Motor 9 mit Getriebe 10 angeordnet. Getriebe 10 wirkt mit der Antriebswelle 11 zusammen. Diese ist im Gehäuse 8 gelagert mit Lager 11.1. Die Antriebswelle 11 besitzt einen Adapter 12, der mit dem untersten Flansch 1 verbunden ist und somit mit dem zweiten Mastabschnitt 5. Mit diesem Antrieb wird der Mast einmal in 24 Stunden um seine horizontale Achse in Uhrgenauigkeit gedreht. Zwischen Gehäuse 8 und Adapter 12 ist die mechanische Steuerung angeordnet mit Steuerscheibe 14 und drehfest mit Gehäuse 8 verbunden. Die Steuerscheibe 14 wirkt mit einem senkrechten Steuerelement 15 zusammen. Dieses Steuerelement 15 ist mit Schwenkhebel 7.1 schwenkbar gelagert und erzeugt einen Auf- und Abhub 7. Durch die horizontale Drehung des Masts wird das Steuerelement 15 zwangsgesteuert mit Steuerscheibe 14 nach oben geführt bis an den Scheitelpunkt "SP" 35 bis das PV-Modul 6 seine waagrechte Lage erreicht hat. Diese Position ist die 12:00 Uhr-Position, in der die Sonne am 21. Juni am höchsten steht (Am Äquator an einem Tag im Jahr). In weiterer Folge bewegt sich das Steuerelement 15 der Steuerscheibe 14 folgend nach unten. Dies wird durch die asymmetrische Anordnung der PV-Modul 6 bewirkt, die durch die asymmetrische Gewichtsverteilung ein Drehmoment Md3 erzeugen, siehe Figur 6.1, welches das Steuerelement 15 nach unten drückt.

Figur 3.1 zeigt die waagrechte Lage von PV-Modul 6, Sonnenhöchststand.

Figur 3.2 zeigt die senkrechte Lage von PV-Modul 6 (Sonnen Auf- und Untergang.)

Figur 3.3 zeigt den Antrieb mit Steuerscheibe 14.

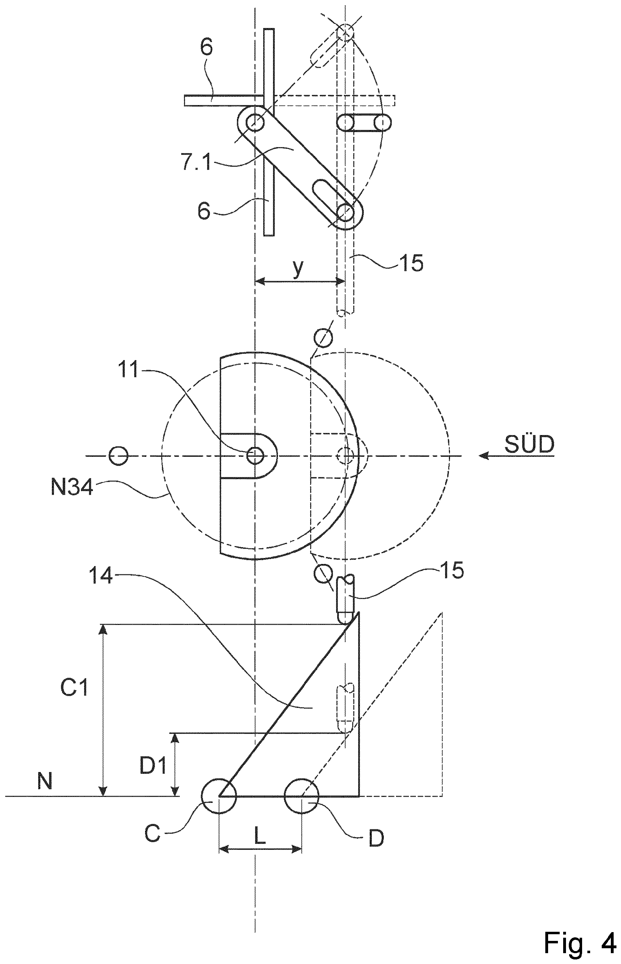

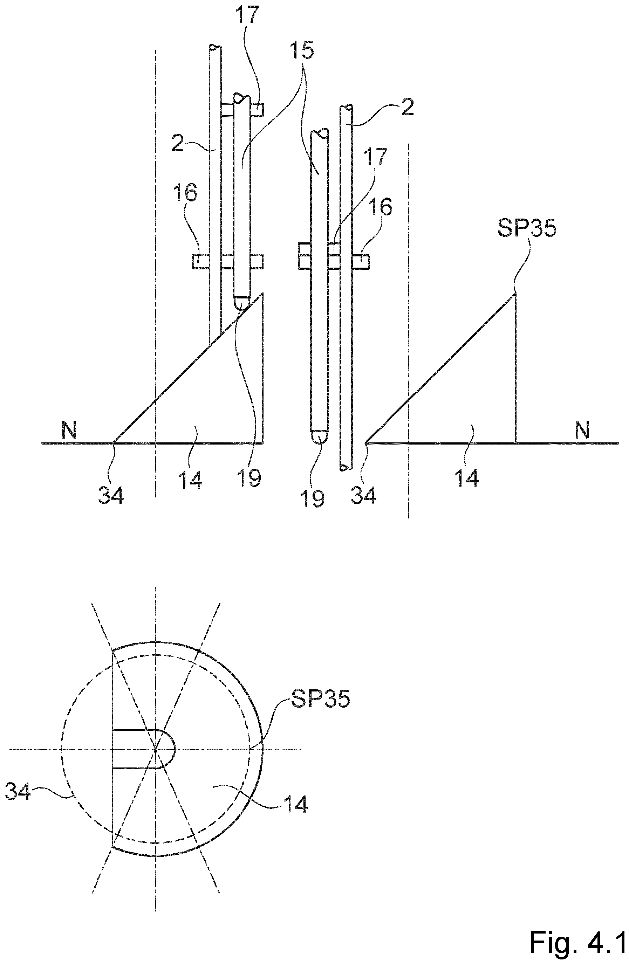

Figur 4 zeigt schematisch den Bewegungsablauf zwischen Steuerscheibe 14 und Steuerelement 15. Dabei ist die horizontale Lageveränderung "L" der Steuerscheibe 14 dargestellt. Diese Lageveränderung "L" bewirkt auch eine unterschiedliche Schwenkung von mindestens zwei PV-Modul 6. Dabei entspricht die Position "C" mit der Höhe "C1" 12 Uhr mittags, am 21. Juni jeden Jahres und die Position "D" der Höhe "D1" dem 21. Dezember jeden Jahres. Also niedrigsten und höchsten Sonnenstand im Jahresverlauf. Die Ebene" N" entspricht dabei jeweils dem Sonnenuntergang beziehungsweise Sonnenaufgang. In diesem Winkelbereich der Ebene" N" der täglichen Drehung, der variabel zwischen 135° und 225° im Jahresverlauf beträgt hat das Steuerelement 15 keinen Kontakt mit der Steuerscheibe 14. Das heißt das untere Ende von Steuerelement 15 ist frei und erzeugt keinerlei Kraft, die der Antrieb leisten muss. Das heißt in diesem Winkelbereich wird eine sehr geringe Leistung benötigt, um die Drehung vom Sonnenuntergang zum Sonnenaufgang zu bewerkstelligen.

Des Weiteren kann man erkennen, dass die Kreisbahn des Steuerelements 15 einen konstanten Radius "y"18 zur Drehachse Mast besitzt. Der Kontaktpunkt zwischen Steuerscheibe 14 und Steuerelement 15 wird durch ein Kugeldrucklager 19 gebildet, wobei sich die Kugel auf der Steuerscheibe 14 abrollt. Dies bewirkt eine äußerst geringe Antriebskraft für den jeweiligen Winkelbereich der Steuerscheibe 15. Die horizontale Längsverstellung "L" von Steuerscheibe 14 kann dabei von Hand, beispielsweise in 6 Monatsschritten durchgeführt werden. Damit wird keine Energie verbraucht. Alternativ ist der Antrieb auch mit einem Motor möglich, der diese Aufgabe, auch tagesgenau, übernimmt. Die Längsverstellung ist nicht dargestellt, nur schematisch mit der Längsverstellung "L". Radius "y" entspricht Radiuskontakt Durchmesser 34. Alternativ kann die Drehbewegung von Ost nach West auch von West nach Ost zurückgedreht werden nach Sonnenuntergang.

Figur 4.1 zeigt schematisch wie Steuerelement 15 eine vertikale Bewegung ausführt. Dabei bewegt sich Steuerelement 15 von der Ebene "N" 34 kommend Kontaktdurchmesser 34 folgend nach Erreichen der Steuerscheibe 14 (Sonnenaufgang ) kontinuierlich bis zum Scheitelpunkt "Sp" 35 Kontakt Durchmesser 34 folgend, nach oben und in weiterer Folge wieder nach unten und verlässt die Steuerscheibe (Sonnenuntergang). Dabei dreht sich Steuerelement 15 auf der Ebene "N" 34 kreisförmig weiter. Die Ebene "N" 34 wird durch den Anschlag 17 bestimmt. Steuerelement 15 ist mit mindestens einem röhrenförmigen Element 2 fest verbunden und führt somit eine synchrone Drehung in 24 Stunden aus. Die Kräfte, die benötigt werden, um den Anstieg an Steuerscheibe 14 bis zum Scheitelpunkt "Sp" 35 werden durch das Kugeldrucklager 19 signifikant reduziert. Im Abstieg Richtung Ebene N 34 werden Kräfte in umgekehrter Richtung erzeugt, die der Motor 9 mit Getriebe 10 aufnimmt. Im Drehbereich der Ebene "N" 34 treten keine Kräfte auf, da diese von Anschlag 17 übernommen werden. Das heißt es ist lediglich die Antriebsleistung bereit zu stellen, die erforderlich ist, um den Mast einmal in 24 Stunden zu drehen außerhalb vom Winkelbereich der Ebene "N" 34.

Die beiden oberen Ansichten zeigen links Steuerelement 14 im Scheitelpunkt "Sp" 35 und rechts im Drehbereich "N" 34. Dabei wird die drehfest mit dem Gehäuse 8 verbundene Steuerscheibe 14 bei dem Aufbau der Anlage mit dem Scheitelpunkt "Sp"35 immer nach Süden ausgerichtet ,12 Uhr mittags auf der Nordhalbkugel der Erde.

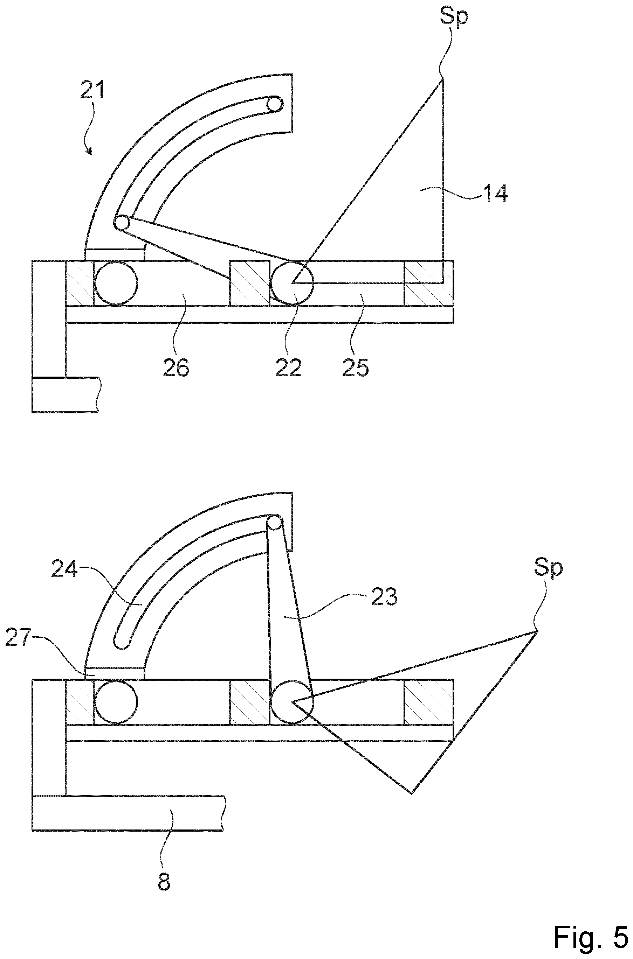

Figur 5 zeigt skizzenhaft eine Schwenk Vorrichtung 21 mit der die Steuerscheibe 14 entsprechend dem Breitengrad und des daraus resultierenden Sonnenstandwinkel Beta 45 des jeweiligen Aufstellungsort der Anlage einmalig justiert wird. Die Steuerscheibe 14 besitzt zwei Lagerzapfen 22, die im Schnittpunkt des keilförmigen Elements, also der Steuerscheibe 14 in horizontaler Achsrichtung angeordnet sind. Die Lagerzapfen 22 lassen sich in einer entsprechenden Führung 25 längs verstellen im Bereich "L" wie in Figur 4 beschrieben. Des Weiteren können die Lagerzapfen 22 um ihre Achse geschwenkt werden. Die Steuerscheibe 14 ist mit einem Justier-Hebel 23 drehfest verbunden. Dieser Justier-Hebel 23 wird in einer Kulisse 24 geführt, die den vorgesehenen Verstellwinkel von beispielsweise 60° Breite abbildet. Der Justier-Hebel 23 wird entsprechend dem Breitengrad des Aufstellungsorts der Anlage verschwenkt und festgestellt. Damit ist die Anlage justiert. Um der Längsverschiebung der Steuerscheibe 14 folgen zu können ist auch die Kulisse 24 längs verschiebbar in Führung 26. Die Kulisse 24 ist drehfest angeordnet und geführt mit Flachführung 27. Die Führungen 25 und 26 mit Flachführung 27 und Kulisse 24 sind dabei ortsfest, horizontal angeordnet und mit Gehäuse 8 fest verbunden. Die obere Skizze zeigt die Anordnung in Breitengrad 0, also am Äquator. Die untere Skizze zeigt die Anordnung im 60. Breitengrad. Dabei ist zu beachten das der einzustellende Winkel der Sonnenstand Winkel und nicht der Breitengrad ist.

Figur 6 zeigt ebenfalls schematisch die Konstruktionsmerkmale, welche die PV-Anlage Wind- und Sturmsicher machen. Die erste Maßnahme bezieht sich auf mögliche Drehkräfte auf den Mast, die von dem Antrieb kompensiert werden müssen. Solche Drehkräfte, welche als Drehmoment Md1; Md2 auf die Längserstreckung des Masts wirken, sind weitestgehend durch die symmetrische Anordnung der beidseitig baugleichen PV-Module 6 eliminiert. Drehmoment Md 1 entspricht Drehmoment Md2. Das wird verdeutlicht im Zusammenhang mit der Windrichtung. Md1 und Md2 entsprechen Pos. 28.

Figur 6.1. Die zweite Maßnahme bezieht sich auf die Biegekräfte auf den Mast, die aus den Windkräften, die auf die Planfläche der PV-Module 6 wirken, resultieren. Um diese zu beherrschen, wird eine außermittige Anordnung der PV-Module 6 an den jeweiligen Wellenstummel 4.1 realisiert. Dadurch entsteht in jedem Fall bei Wind ein Drehmoment Md3, Pos.29 auf die PV-Module 6. In weiterer Folge würden sich die PV-Module 6 in den Wind stellen, indem diese sich um den Wellenstummel 4.1 verschwenken da die PV-Module 6 schwenkbar am Wellenstummel 4.1 gelagert sind.

Um dies zu begrenzen ist zwischen Wellenstummel 4.1 und PV-Modul 6 ein Drehmomentbegrenzungs-Element 30 vorgesehen. Dieses Moment-Begrenzung-Element 30 bewirkt, dass sich die PV -Module 6 ab einer gewissen festzulegenden Windgeschwindigkeit in den Wind stellen also verschwenken und bei nachlassendem Wind sich die PV-Module 6 wieder in ihre Ausgangslage zurückstellen. Dabei werden zwischen Wellenstummel 4.1 und Rückwand 31 des jeweiligen PV-Moduls 6 beispielsweise zwei Schenkelfedern 32 angeordnet, deren Kennlinie so ausgelegt ist, dass sich die PV-Module 6 erst ab einer vorgegebenen Windgeschwindigkeit durch Verdrehen auf dem Wellenstummel 4.1 in den Wind stellen. Dabei wirkt eine erste Schenkelfeder 32 in eine Drehrichtung und eine Zweite in die umgekehrte Drehrichtung. Dadurch ist die vorgegebene Position der PV-Module am Mast gewährleistet, also die Position ohne Wind. Die PV -Module 6 sind dabei schwenkbar an den Wellenstummeln 4.1 gelagert und befestigt mit Lager 33. Die Schenkelfedern sind dabei drehfest mit dem jeweiligen Ende, das nicht auf die PV-Modul 6 wirkt, mit dem Wellenstummel 4.1 verbunden. Zur Ausrichtung der PV-Module 6 beim Aufbau der Anlage sind die Schenkelfedern 32 mit einer Feinjustierung 36 ausgestattet. Alternativ können auch mehrere PV-Module 6 mit Trägerelement 6.1 zusammengefasst werden. Die in weiterer Folge gemeinsam an Wellenstummel 4.1 gelagert sind. Dadurch wird mit zwei Schenkelfedern ein synchrones verschwenken einer kompletten PV-Modul Reihe realisiert. In diesem Fall ist ein Trägerelement 6.1 erforderlich. Wenn die PV-Module keine senkrechte Position einnehmen können, also niemals senkrecht stehen, und immer einen gewissen Elevation Winkel besitzen können die PV-Module auch mittig angeordnet werden. In diesem Fall ist es ausreichend, wenn das Drehmoment-Begrenzungselement aus beispielsweise nur einer Schenkelfeld besteht, da unabhängig von der Windrichtung immer nur ein Drehmoment in eine Drehrichtung entstehen kann (Diese Version ist nicht dargestellt).

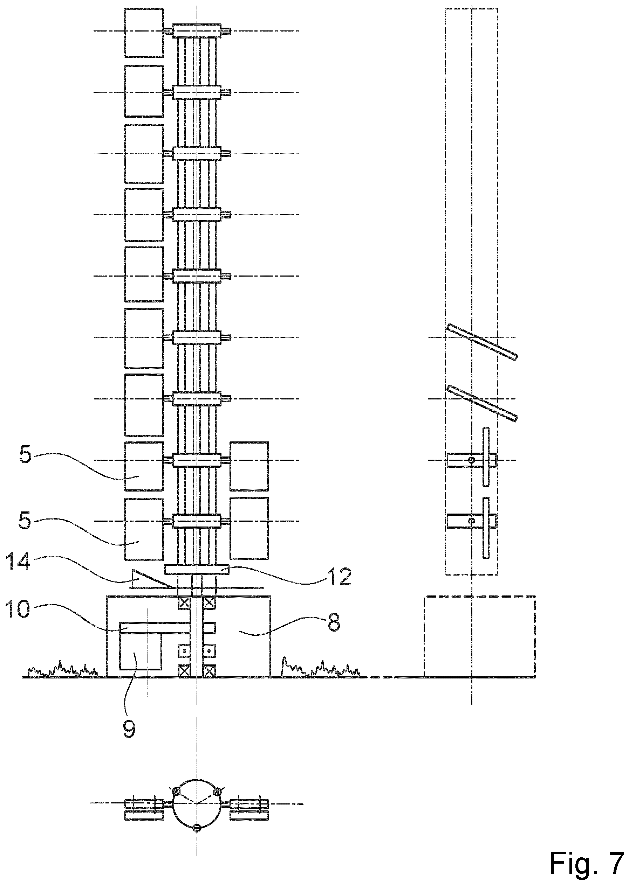

Figur 7 zeigt skizzenhaft die komplette PV-Anlage, aufgestellt am Boden. Eine Mastbefestigung ist alternativ auch an einer Gebäudewand oder am Dach möglich (nicht dargestellt).Zunächst zeigt die Skizze übereinander angeordnete Mastabschnitte 5, die baugleich sind und jeweils beidseitig mindestens ein PV-Modul 6 an Wellenstummel 4.1 aufnehmen. Des Weiteren kann man die Verstellbarkeit der PV-Module 6 von der senkrechten Lage in eine entsprechende schräge Lage erkennen.

Dabei wird die schräge Lage der PV-Module 6 12:00 Uhr mittags erreicht, je nach Breitengrad des Installation Ortes und die senkrechte Lage von Sonnenuntergang bis Sonnenaufgang. Der Mast wird von einem Gehäuse 8 mit Motor 9 und Getriebe 10 aufgenommen und mittels Adapter 11 am Flansch 1 befestigt. Oberhalb von Gehäuse 8 ist die Steuerscheibe 14 angeordnet, die mit dem Steuer-Element 15 (nicht dargestellt) zusammenwirkt. Der Motor 9 mit Getriebe 10 bewirkt eine Umdrehung des Masts in 24 Stunden, entsprechend beispielsweise einer 24 Stunden Uhr. Also in Uhrgenauigkeit. Alternativ ist auch eine Drehung von Ost nach West mit entsprechender Rückstellung von West nach Ost möglich. Der erste Mastabschnitt 5 MA 1 ist starr, drehfest und senkrecht mit beispielsweise einem Fundament verbunden. Alternativ kann auch ein entsprechender Elevationswinkel von beispielsweise 20 Grad-60 Grad gewählt werden. In diesem Fall wird die Drehmomentbegrenzung auf eine Drehrichtung reduziert (nicht dargestellt).

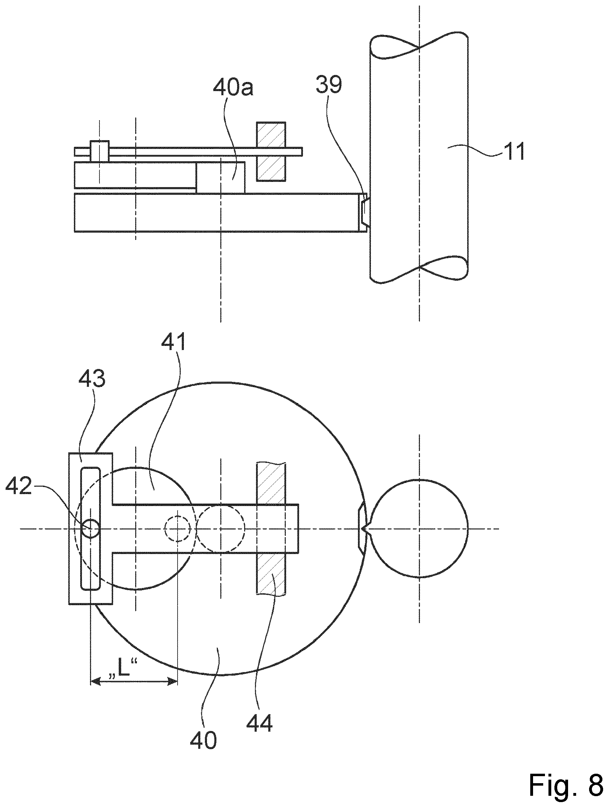

Figur 8 zeigt skizzenhaft eine Getriebeversion zur automatischen mechanischen Abbildung des jahreszeitlichen Sonnenstandes, also des Sonnenazimut, auf. Andere Getriebe sind möglich. Entscheidend ist das in Antriebswelle 11 ein Steuernocken 39 positioniert ist der mit einer Umdrehung am Tag das Kammrad 40 mit Abtrieb 40a um einen bestimmten Winkel um die Kammradachse dreht. Es handelt sich also um ein Schrittgetriebe. Wird die Steuerung gewählt, die die Drehung der Antriebswelle 11 wieder zurückführt nach Sonnenuntergang in die Sonnenaufgangsposition wird der Steuernocken 39 so ausgeführt, dass dieser beispielsweise mit Drehpunkt und Feder ausgestattet vom Kammrad 40 beim Zurückdrehen zur Antriebswelle 11 radial verschwenkt wird, also ausweicht und somit keine Rückstellung des Kammrads 40 erfolgt. Kammrad 40 greift mit Abtrieb 40 a in Rad 41 ein. Rad 41 besitzt einen Steuerbolzen 42 Dieser Steuerbolzen 42 beschreibt mit einer halben Umdrehung also 180 Grad von Rad 41 den Weg, der der Länge "L" entspricht (Fig.4). Die Länge "L" bildet den Sonnenazimut ab. Der Steuerbolzen 42 wirkt mit einer Hub Kulisse 43 zusammen die eine tägliche Längsbewegung erzeugt die der täglichen Veränderung des Sonnenazimut entspricht an 182 Tagen. Dies entspricht dem Hub von einem halben Jahr vom 21.12.bis 21.6.jeden Jahres. In weiterer Folge wird durch Weiterdrehen des Abtriebs Rad 41 um weitere 180 Grad der umgekehrte Hub erzeugt, das heißt es wird der Zeitraum vom 21. Juni bis 21.Dezember abgebildet. Dieser Prozess wiederholt sich jährlich. Die Hub-Kulisse 43 wirkt dabei horizontal mit Element "C" zusammen und bewegt dieses von "C" nach "D" und wieder zurück, siehe Figur 4. Hub-Kulisse 43 ist mit Element 44 geführt. Die Kulisse in Hub-Kulisse 43 ist vereinfacht dargestellt und entspricht nicht der Kurve die erforderlich ist, um den Sonnenazimut abzubilden.

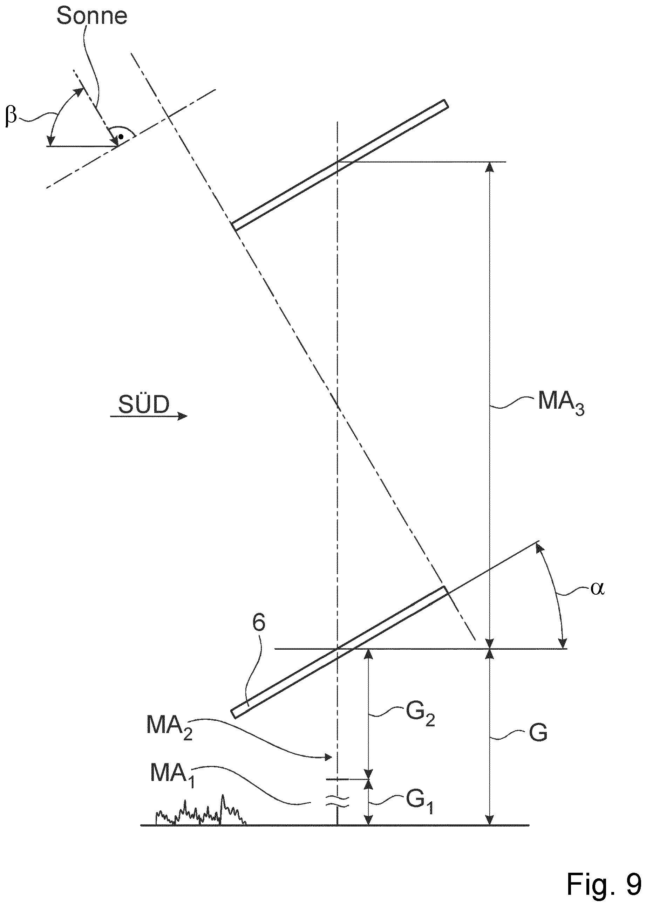

Figur 9 zeigt skizzenhaft den geometrischen Aufbau einer PV- Anlage. Dabei ist der Erste Mastabschnitt MA1 mit Höhe G1 drehfest, senkrecht, starr beispielsweise an einem Fundament befestigt. Fundament F 57 und andere Befestigungen werden nicht dargestellt. Höhe G 1 kann variabel ausgeführt sein in etwa von 0,5 m bis 2,5 m, je nach Anforderung und Nutzung des Grunds, auf dem die PV- Anlage installiert wird. So kann diese Höhe bei einer Wiese geringer sein als auf einem Maisfeld. In Mastabschnitt 5 MA1 ist auch der komplette Antrieb mit Antriebswelle 11 integriert bei PV-Anlagen mit ein oder zwei Achs Steuerung. Mastabschnitt 5 MA1 erstreckt sich bis zur Höhe G1 welche die Schnittstelle zu Mastabschnitt 5 MA2 bildet und weitere Mastabschnitte 5 MA3, 4, n bildet mit Flansch1.Dabei sind die Mastabschnitte 5 MA 3, 4, n. baugleich ausgeführt. Die Höhe von Mastabschnitt 2 wird dabei so gewählt das diese bei senkrechter Anordnung vom PV- Modul 6 mit dessen Unterkante in etwa gleich hoch ist wie Mastabschnitt 5 MA1.Die Mastabschnitte 5 MA 1, 2, 3, n sind in dieser Version senkrecht angeordnet. Damit sind auch die entsprechenden PV-Module 6 senkrecht übereinander angeordnet. Bei starren PV-Anlagen ohne Antrieb zeigt die PV aktive Seite von PV-Modul 6 nach Süden.

Bei PV- Anlagen mit Ein -Achs-Steuerung wird ebenfalls der optimale Winkel Alpha der PV-Module 6 fixiert. Wobei sich der Mast im Tagesverlauf von Ost nach West dreht. Die PV-Module 6 sind also bei starren drehfesten und Ein-Achs gesteuerten Anlagen mit Winkel Alpha 46 optimiert lagefixiert am Wellenstummel 4.1 angeordnet. Des Weiteren zeigt Figur 9 den Zusammenhang von den Mastabschnitten MA 5 2; 3; n und der Eigen Verschattung der PV-Module 6 untereinander im Zusammenwirken mit dem Sonnenstandwinkel Beta 45. Je größer Mastabschnittshöhe MA 2, 3, 4, 5, je größer kann der Sonnenstandwinkel sein, wobei beispielsweise PV-Modul 6 Winkel Alpha 46 30 Grad plus Sonnenstandwinkel Beta 45 60 Grad 90 Grad ergeben. Aus diesem Zusammenhang wird ersichtlich, dass alle in Figur 9 aufgezeigten Parameter variabel sind und die jeweilige PV-Anlage spezifisch angepasst werden kann wobei sich diese Anpassung im Wesentlichen auf den jeweiligen Sonnenstandwinkel Beta 45 bezieht der in Abhängigkeit vom jeweiligen Breitendgrad variiert.

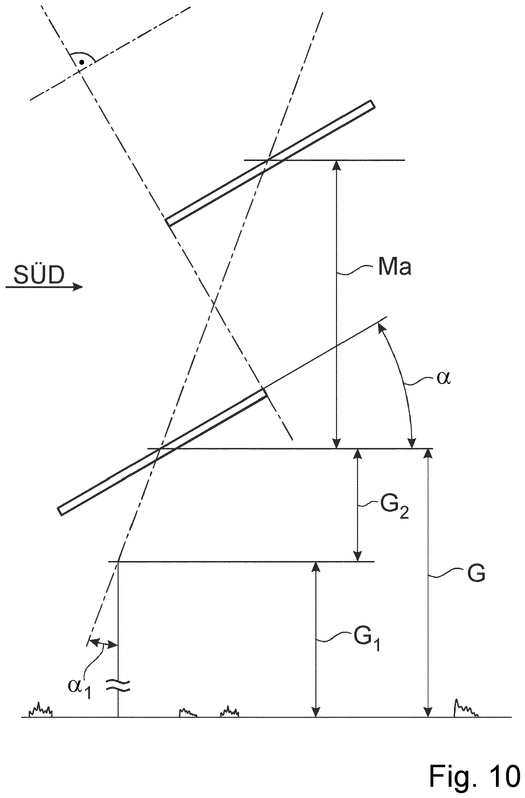

Figur 10 zeigt eine PV-Anlage die nach der Höhe G1 von Mastabschnitt 5 MA1 an der Schnittstelle von Flansch1 mit Mastabschnitt 5 MA 2 und den folgenden MA3,4, n schräg angeordnet ist mit Winkel Alpha 1;47. Die Bedingungen von starren PV- Anlagen sowie PV-Anlagen mit Einachs-Steuerung entsprechen Figur 9. Bei diesem Ausführungsbeispiel, das die gleichen Winkel Alpha 46 und Beta 45 wie Figur 9 zeigen kann man erkennen, dass die Verkürzung der Mastabschnittshöhe MA signifikant ist. Diese Möglichkeit kann genutzt werden, um entweder die Gesamtmasthöhe H max. 53 zu reduzieren oder um eine weitere PV- Modul 6 Reihe zu installieren.

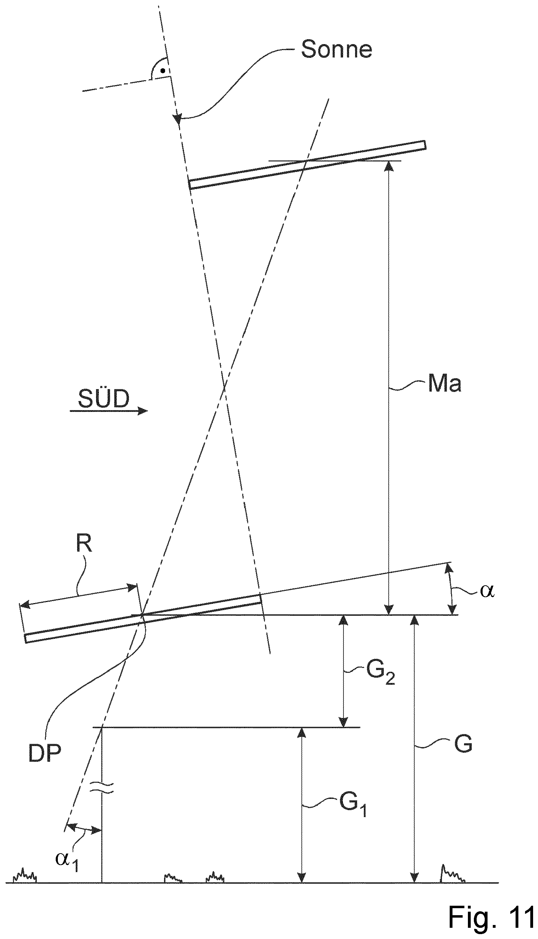

Figur 11 zeigt gegenüber Figur 10 die Möglichkeit auf den Sonnenstandwinkel Beta 45 signifikant zu erhöhen bei gleichem Mastabstand MA wie in Figur 9, also deutlich größer, wie in Figur 10 und den Winkel Alpha 46 von PV- Modul 6 deutlich zu reduzieren. Dabei ist Winkel Alpha 1;47 gleich der Figur 10. Mit R 49 um Drehpunkt Dp von PV- Modul 6 wird die Höhe G2 beispielhaft dargestellt, welche der Höhe des Mastabschnitts 5 MA2 entspricht.

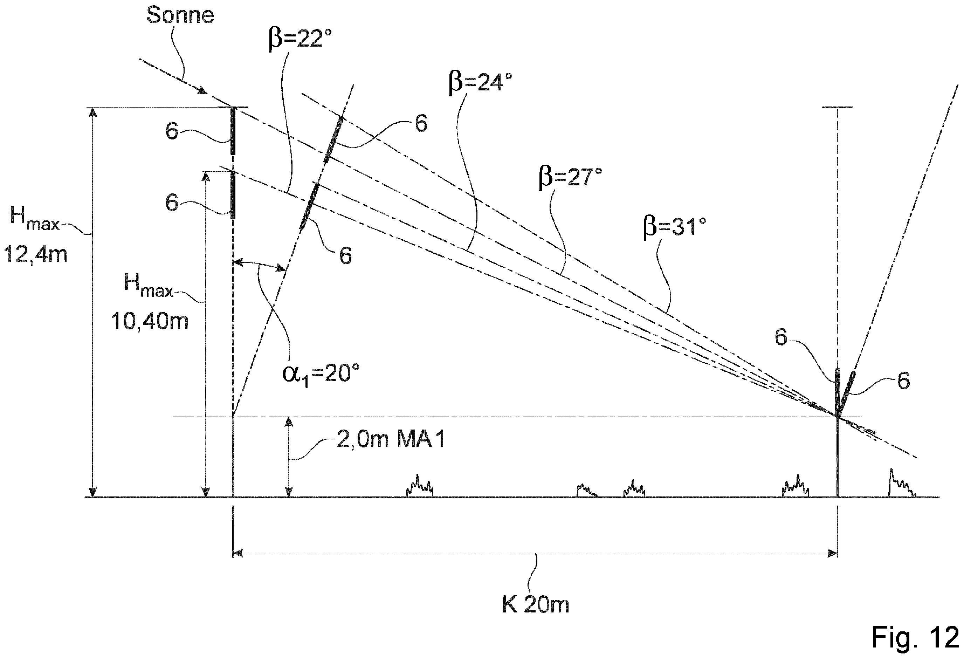

Figur 12 zeigt schematisch eine erste PV-Anlage und eine zweite PV-Anlage mit Abstand K=20m. Es zeigt zwei mögliche Höhen Hmax. 10,40 m und 12,40m sowie die daraus resultierenden Sonnenstrahlung Winkel Beta 45. Dieser Winkel Beta 45 wird von der obersten Erstreckung von PV-Modul 6 der untersten PV-Modul-Reihe PV-Anlage zur untersten Kante von PV-Modul 6 der PV-Anlage definiert. In einer Darstellung ist der Mast mit Mastabschnitten 5 MA 2; 3;n senkrecht auf Mastabschnitt 5 MA1 aufgesetzt und in der anderen Darstellung ist der Mast mit Mastabschnitt 5 MA 1, 2, 3, n schräg mit Winkel Alpha 1 =20 Grad aufgesetzt. Die jeweiligen Sonnenstrahlung Winkel Beta 45 sind also einfach durch Veränderung der Parameter Hmax. 53; Winkel Alpha 1;47 , und Abstand K veränderbar. Die jeweiligen Sonnenstrahlung Winkel Beta 2; 52 zeigen dabei den Bereich auf, ab dem die PV-Anlagen zueinander frei von Verschattung sind.

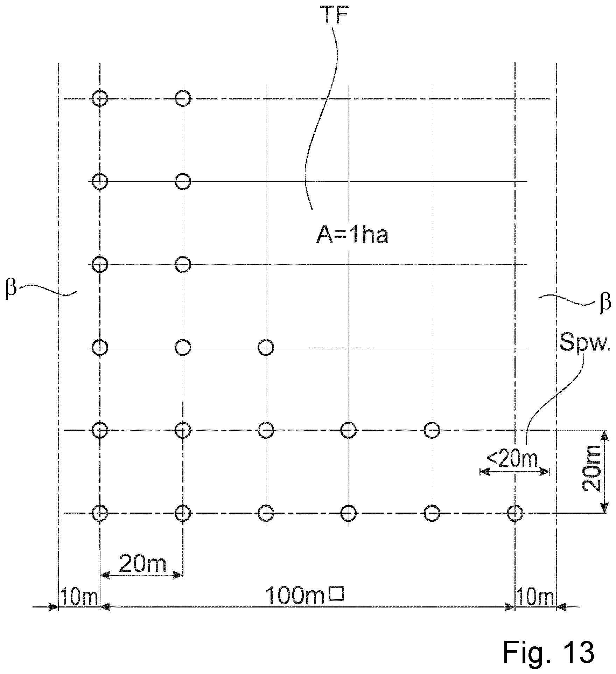

Figur 13 zeigt beispielhaft die Anordnung von 36 PV- Anlagen auf einer Fläche TF 54 von einem Hektar, also 100 mX 100 mB 55, zeigt den Randabstand von 10 m auf. Die Spannweite "Spw" 56 der jeweiligen PV- Anlage ist kleiner 20 m.

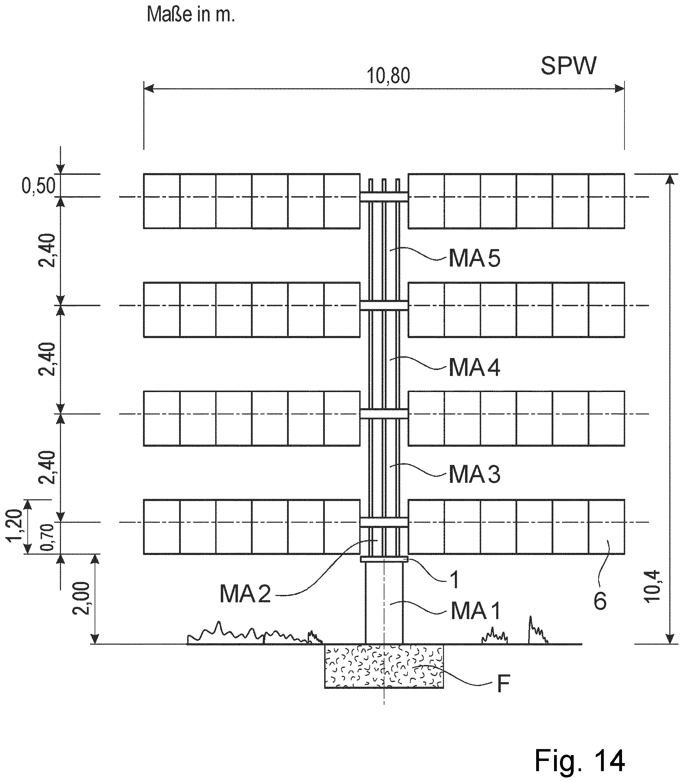

Figur 14 zeigt eine PV-Anlage in der Hauptansicht skizzenhaft. Diese besteht aus einem Fundament F 56, auf dem ein Mastabschnitt 5 MA1 senkrecht aufgesetzt und fest verbunden wird. Dabei beinhaltet Mastabschnitt 1 bei Anlagen mit Sonnen Nachführung die gesamte Steuerung mit Antriebswelle 11.Die Schnittstelle ist Flansch1 mit dem Mastabschnitt 5 MA 2 der die ersten beiden Reihen PV-Module 6 trägt. Es folgen Die Mastabschnitte 5 MA 3,4,n die baugleich sind. Diese PV-Anlage im Beispiel hat eine Gesamthöhe H max. 53 von ca. 10,40m und eine Spannweite 56 SPW von ca. 10,80 m. Bei einem Abstand 51 K von 20 m der Anlagen zueinander wird eine Verschattung Freiheit der PV-Module 6 bei einem Sonnenstandwinkel von ca. 23 Grad erreicht. Das bedeutet das die PV-Module 6 180 Grad des Tages minus zweimal 23 Grad gleich 134 Grad frei von Verschattung sind.

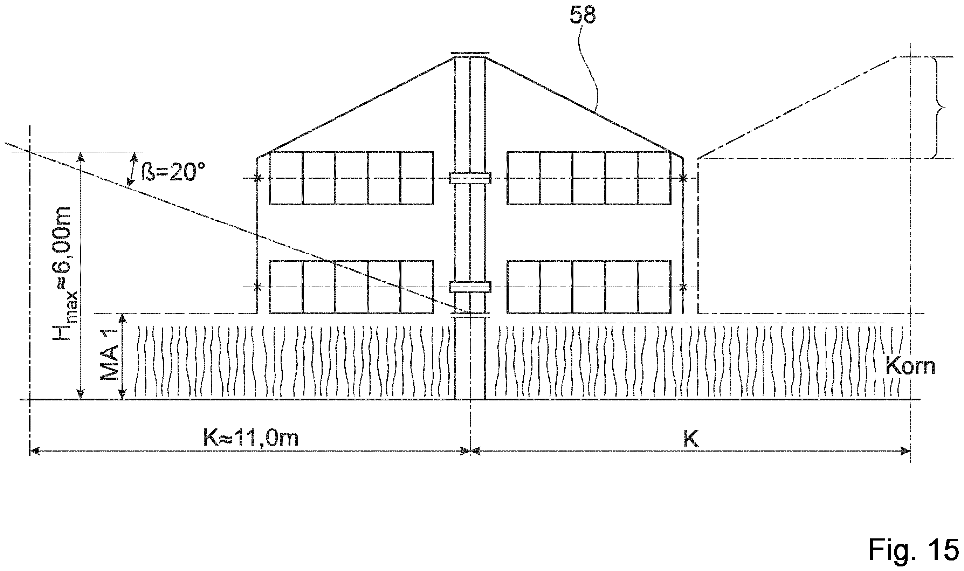

Figur 15 zeigt eine alternative Anlage mit Spannweite SPW kleiner PV-Anlagen Abstand K mit 2 PV-Modulreihen 6 die sehr niedrig gebaut ist. Aus den Figuren ist ersichtlich das die Ausführungen der jeweiligen Anlagen sehr vielfältig sind. Position 58 zeigt einen Stabilisator auf, der dynamische und statische Kräfte kompensiert. Solche Stabilisatoren aus Seilen oder Stäben 58 sind grundsätzlich bei allen beschriebenen PV-Anlagen-Ausführungen möglich.

### Bezugszeichenliste

1 Flansch
1.1 Aufnahmekontur
2 röhrenförmiges Element
3 Lager
4 Welle
4.1 Wellenstummel
5 Mast- Abschnitt MA1; 2; 3; n
6 PV-Modul/Modulreihen
6.1 Trägerelement
7 Auf und ab Hub
7.1 Schwenkhebel
H1 < h2
8 Gehäuse
9 Motor
10 Getriebe
11 Antriebswelle
11.1 Lager
12 Adapter
13 Tragkonstruktion
14 Steuerscheibe
15 Steuerelement
16 Führung
17 Anschlag
18 Radius y
19 Kugeldrucklager
20 Längsverstellung horizontal "L"
21 Schwenk Vorrichtung
22 Lagerzapfen
23 Justier-Hebel
24 Kulisse
25 Führung
26 Führung
27 Flachführung
28 Drehmoment Md1; Md2
29 Md3
30 Moment-begrenzungs-Element
31 Rückwand
32 Schenkelfeder
33 Lager
34 Ebene "N", sowie Kontaktdurchmesser von Kugeldrucklager 19 auf Steuerscheibe 14
35 Scheitelpunkt "Sp"
36 Feinjustierung
37 Steuerung je PV Anlage
38 Zentralsteuerung für mehrere PV-Anlagen
39 Steuernocken
40 Kammrad mit Abtriebs Rad 40a
41 Abtrieb Rad
42 Steuerbolzen
43 Hub-Kulisse
44 Führung Hub -Kulisse mit Steuerfinger
45 Sonnenstandwinkel oder Sonnenhöhenwinkel ,Beta
46 PV Modul Winkel Alpha
47 Schrägstellung Winkel Mast, Alpha 1
48 Mastabschnittshöhe MA 1;2;3;4;5...
49 R =G2
50 DP =Drehpunkt PV-Panel 6
51 K= Abstand der PV Anlagen zueinander
52 Beta 2=Winkel der totalen Verschattung Freiheit der PV Anlagen zueinander
53 H max. = Gesamthöhe einer bestimmten PV Anlage
54 Fläche TF
55 B = Randabstand der Fläche TF
56 SPW = Spannweite PV Module 6
57 Fundament F
58 Stabilisator

## Patentansprüche

1. Vertikale Photovoltaikanlage mit einem Mast und mindestens zwei PV-Modulen (6), wahlweise in starrer Ausführung, oder mit ein Achs Sonnen Nachführung oder mit zwei Achs Sonnen Nachführung, wobei die Photovoltaikanlage einen ersten Mastabschnitt (5, MA1) aufweist, der starr, drehfest und senkrecht angeordnet ist, wobei mindestens ein weiterer Mastabschnitt (MA2) auf den Mastabschnitt (5 MA1) aufgesetzt wird und wobei der weitere Mastabschnitt (5 MA 2) mindestens eine horizontal angeordnete Welle aufweist, die beidseitig symmetrisch mindestens mit einem PV-Modul (6) bestückt ist und wobei weitere Mastabschnitte (5 MA2,3,4,n,) senkrecht oder schräg mit einem Winkel (Alpha 1;47) aufgesetzt werden und wobei der Winkel (Alpha 1;47) von der Sonne aus betrachtet immer 90 Grad plus Winkel (Alpha 1;47) ist und wobei die weiteren Mastabschnitte (5 MA2,3,4,n,) in ihrer Längserstreckung drehbar ausgeführt sein können, wobei die Drehung dem Tagesverlauf der Sonne folgt, wobei das PV-Modul (6) verschwenkbar an einem Wellenstummel (4.1) angeordnet und zwischen dem Wellenstummel (4.1) und dem PV-Modul (6) ein Drehmomentbegrenzungs-Element (30) angeordnet ist, so dass ab einer vorgegebenen Windlast sich das PV-Modul (6) horizontal um den Wellenstummel (4.1) aus dem Wind dreht.

2. Vertikale Photovoltaikanlage nach Anspruch 1, **dadurch gekennzeichnet, dass** der Mast aus mehreren Mastabschnitten (MA 5 2,3,4,) besteht und wobei an den Schnittstelen der Mastabschnitte ein Flansch (1) angeordnet ist, der eine horizontale Lagerung für eine Welle (4) besitzt, wobei die Welle (4) symmetrisch beidseitig herausragt und mit dem Wellenstummel (4.1) jeweils mindestens ein PV-Modul (6) aufnimmt, das verschwenkbar an den Wellenstummel (4.1) gelagert und fixiert ist, wobei das PV-Modul (6) asymmetrisch gelagert ist bezogen auf die Rotationsachse von Wellenstummel (4.1) und wobei die Mastabschnittshöhe (48) variabel ausgeführt sein kann.

3. Vertikale Photovoltaikanlage nach Anspruch 1 oder 2, **dadurch gekennzeichnet, dass** der weitere Mastabschnitt (MA 5 ; 2) alle weiteren Mastabschnitte (MA 5; 3, 4, n) umfasst und der Mast einteilig oder mehrteilig ausgeführt werden kann, wobei die jeweilige Längserstreckung einteilig ausgeführt ist, wobei der weitere Mastabschnitt (MA 5;2) an einem Adapter (12) mit einer Antriebswelle (11) fest verbunden ist, die jeweiligen weiteren Mastabschnitte (MA 5;2;3;n) durch eine entsprechende horizontale Befestigung von der Welle (4) mit mindestens zwei Mastabschnittshöhen (48) gebildet werden und die Mastabschnittshöhe (48) variabel ausgeführt sein kann.

4. Vertikale Photovoltaikanlage nach einem der Ansprüche 1 bis 3, **dadurch gekennzeichnet, dass** der Antrieb für die Drehung der weiteren Mastabschnitte (5, MA 2,3,4,n,) in den ersten Mastabschnitt (MA1) integriert ist, welcher einen Motor (9) mit einem Getriebe (10) und einer Antriebswelle (11) aufweist, wobei die Antriebswelle (11) senkrecht angeordnet ist und wobei die Antriebswelle (11) mit einem Adapter (12) an einem Flansch (1) drehfest verbunden ist und der Flansch (1) der unterste Teil vom weiteren Mastabschnitt (5, MA2) ist.

5. Vertikale Photovoltaikanlage nach einem der Ansprüche 1 bis 4, **dadurch gekennzeichnet, dass** die PV-Anlage eine elektromechanische Steuerung zur Sonnennachführung besitzt, wobei zwischen einem Gehäuse (8) und dem Adapter (12) eine Steuerscheibe (14) drehfest mit dem Gehäuse (8) verbunden angeordnet ist, wobei die Steuerscheibe (14) mit einem vertikalen Steuerelement (15) zusammenwirkt, wodurch ein Auf- und Abhub (7) erzeugt wird und über einen Schwenkhebel (7.1) eine Drehung um einen variablen Winkel der Welle (4) mit den zwei Achsstummel (4.1) erfolgt, welche ein Schwenken der beidseitig symmetrisch an Wellenstummel (4.1) angeordneten PV-Modulen (6) um Wellenstummel (4.1) bewirkt, und wobei die Steuerscheibe (14) in einer Führung (25) mit zwei Lagerzapfen (22) mit einem Justier-Hebel (23) verschwenkt werden kann und in einer Kulisse (24) justiert und befestigt wird.

6. Vertikale Photovoltaikanlage nach einem der Ansprüche 1 bis 5, **dadurch gekennzeichnet, dass** die Steuerscheibe (14) horizontal verschiebbar ist zur jahreszeitlichen Sonnennachführung, wobei eine Schwenk-Vorrichtung (21) in einer Führung (26) mit einer Flachführung (27) drehfest horizontal verschiebbar ist, wobei sich die Steuerscheibe (14) synchron mit verschiebt um eine Länge "L", wobei die Steuerscheibe (14) durch horizontales Verschieben von Weg "L" unterschiedliche Schwenkhöhen (7) erzeugt, und zwar von Ebene "N" in Position "C" auf Schwenkhöhe (7,) "C1" und von Position "D" auf "D1" und das Steuerelement (15) eine Umdrehung in 24 Stunden um Kreis "N" (34) beschreibt, wobei das Steuerelement (15) mit mindestens einem röhrenförmigen Element (2) mit einem Radius y (18) angeordnet ist.

7. Vertikale Photovoltaikanlage nach einem der Ansprüche 1 bis 6, **dadurch gekennzeichnet, dass** die Steuerscheibe (14) in der Vogelperspektive ein Kreissegment darstellt, das in Position "C" begrenzt ist am 21. Juni jeden Jahres und in Position "D" am 21. Dezember jeden Jahres, und wobei das Steuerelement (15) die Steuerscheibe (14) von Sonnenuntergang bis Sonnenaufgang verlässt und dabei die Ebene "N" von Anschlag (17) gehalten wird, und wobei das Steuerelement (15) im Kreissegment der Steuerscheibe (14) sich in Richtung Scheitelpunkt "Sp" (35) nach oben bewegt und nach Erreichen des Scheitelpunkts "Sp" (35) wieder nach unten bewegt, wobei der Kontakt zur Steuerscheibe (14) mit einem Kugeldrucklager (19), welches am unteren Ende von Steuerelement (15) angeordnet ist, stattfindet.

8. Vertikale Photovoltaikanlage nach einem der Ansprüche 1 bis 7, **dadurch gekennzeichnet, dass** die PV-Anlage das Dreh-Momentbegrenzungs-Element (30) besitzt zur Begrenzung der Windlast, die auf die PV-Module (6) mit einem Drehmoment (Md3) wirkt, wobei die PV-Module (6) außermittig (h1; h2) an den Wellenstummel (4.1.) angeordnet sind und wobei die PV-Module (6) schwenkbar um Wellenstummel (4.1) gelagert und befestigt sind und wobei zwischen Rückseite des PV-Moduls (6), mit oder ohne Trägerelement (6.1) und den Wellenstummeln (4.1) das Drehmoment-Begrenzung-Element (30) angeordnet ist, das aus zwei Schenkelfedern (32) gebildet wird, wobei eine Schenkelfeder (32) rechtsdrehend und die andere linksdrehend vorgespannt ist und somit das PV-Modul (6) auf dem Wellenstummel (4.1) lagefixiert, und wobei jeweils ein Ende der Feder drehfest mit dem Wellenstummel (4.1) verbunden ist.

9. Vertikale Photovoltaikanlage nach einem der Ansprüche 1 bis 7, **dadurch gekennzeichnet, dass** die PV-Anlage das Dreh-Momentbegrenzungs-Element (30) besitzt zur Begrenzung der Windlast, die auf die PV-Module (6) mit einem Drehmoment (Md3) wirkt, wobei die PV-Module (6) mittig an den Wellenstummel (4.1.) angeordnet sind und wobei die PV-Module (6) schwenkbar um Wellenstummel (4.1) gelagert und unter einem vorgegeben Elevationswinkel befestigt sind und wobei zwischen Rückseite des PV-Moduls (6) und den Wellenstummeln (4.1) das Drehmoment-Begrenzung-Element (30) angeordnet ist, das aus einer Schenkelfedern gebildet ist, wobei ein Ende der Feder drehfest mit dem Wellenstummel (4.1) verbunden ist.

10. Vertikale Photovoltaikanlage nach einem der Ansprüche 1 bis 9, **dadurch gekennzeichnet, dass** die PV-Anlage eine weitere Windlastbegrenzung besitzt, wobei sich die Drehmomente (Md1, Md2) der PV-Module (6) gegenseitig aufheben durch die symmetrische Anordnung der PV-Module (6) beidseitig am Wellenstummel (4.1).

11. Vertikale Photovoltaikanlage nach einem der Ansprüche 1 bis 10, **dadurch gekennzeichnet, dass** die Längsverstellung "L" mit Hand in beispielsweise sechs Schritten vorwärts und in weiterer Verstellung sechs Schritten wieder zurückgestellt werden kann.

12. Vertikale Photovoltaikanlage nach einem der Ansprüche 1 bis 11, **dadurch gekennzeichnet, dass** die mechanische Steuerung einen automatischen Antrieb besitzt, der den jahreszeitlichen Verlauf der Sonne abbildet, wobei die Antriebswelle (11) einen Steuernocken (39) besitzt, der täglich einmal in ein Schrittgetriebe mit einem Kammrad (40) eingreift und um einen gewissen Winkel dreht und wobei ein Steuerbolzen (42) in eine Hub-Kulisse (43) eingreift und damit die Drehbewegung in eine Längsbewegung transformiert, wobei die Längsbewegung dem Hub "L" entspricht.

13. Vertikale Photovoltaikanlage nach einem der Ansprüche 1 bis 12, **dadurch gekennzeichnet, dass** die Verbindung vom unteren Flansch (1) und dem oberen Flansch (1) vom weiteren Mastabschnitt (2; 3; 4; n) mit mindestens drei röhrenförmigen Elementen ausgeführt ist, wobei am Flansch (1) jeweils eine Welle (4) mit zwei symmetrisch angeordneten Wellenstummeln (4.1) ausgeführt ist, wobei Welle (4) mit dem Wellenstummel (4.1) drehfest verbunden ist und wobei die Welle (4) oder Wellenstummel (4.1) mit Schwenkhebel (7.1) drehfest zusammenwirkt.

14. Vertikale Photovoltaikanlage nach einem der Ansprüche 1 bis 13, **dadurch gekennzeichnet, dass** im ersten Mastabschnitt (5 MA1) der Antrieb mit Antriebswelle (11) integriert ist.

15. Vertikale Photovoltaikanlage nach einem der Ansprüche 1 bis 14, **dadurch gekennzeichnet, dass** diese nach der Höhe (G1) vom ersten Mastabschnitt (5 MA1) an der Schnittstelle vom Flansch (1) mit dem zweiten Mastabschnitt (5 MA 2) und den folgenden Mastabschnitten (MA3,4, n) um einen Winkel (Alpha) schräg angeordnet ist.

## Claims

1. Vertical photovoltaic system having a mast and at least two PV modules (6), optionally in a rigid configuration, or having single axis solar tracking or dual axis solar tracking, wherein the photovoltaic system comprises a first mast portion (5, MA1) which is arranged vertically in a rigid and rotationally fixed manner, wherein at least one further mast portion (MA2) is placed on the mast portion (5 MA1), and wherein the further mast portion (5 MA 2) has at least one horizontally arranged shaft, which is equipped symmetrically on both sides at least with a PV module (6), and wherein further mast portions (5 MA2,3,4,n,) are placed vertically or obliquely at an angle (Alpha 1;47), and wherein the angle (Alpha 1;47), viewed from the sun, is always at least 90 degrees plus the angle (Alpha 1;47), and wherein the further mast portions (5 MA2,3,4,n,) can be designed to be rotatable in the longitudinal extension thereof, wherein the rotation follows the course of the sun, wherein the PV module (6) is pivotably arranged on a shaft stub (4.1) and a torque limiting element (30) is arranged between the shaft stub (4.1) and the PV module (6), so that, from a predetermined wind load, the PV module (6) rotates horizontally about the shaft stub (4.1) out of the wind.

2. Vertical photovoltaic system according to claim 1, **characterized in that** the mast consists of a plurality of mast portions (MA 5 2,3,4,), a flange (1) being arranged at the interfaces of the mast portions, which flange has a horizontal bearing for a shaft (4), the shaft (4) projecting symmetrically on both sides and in each case receiving at least one PV module (6) with the shaft stub (4.1), which PV module is pivotably mounted on and fixed to the shaft stub (4.1), the PV module (6) being mounted asymmetrically in relation to the axis of rotation of the shaft stub (4.1) and it being possible for the mast portion height (48) to be variable.

3. Vertical photovoltaic system according to either claim 1 or claim 2,
**characterized in that** the further mast portion (MA 5; 2) comprises all further mast portions (MA 5; 3, 4, n) and the mast can be formed in one piece or in multiple pieces, the relevant longitudinal extension being formed in one piece, the further mast portion (MA 5;2) being fixedly connected to a drive shaft (11) on an adapter (12), the respective further mast portions (MA 5;2;3;n) being formed by a corresponding horizontal fastening of the shaft (4) with at least two mast portion heights (48), and it being possible for the mast portion height (48) to be variable.

4. Vertical photovoltaic system according to any of claims 1 to 3,
**characterized in that** the drive for the rotation of the further mast portions (5, MA 2,3,4,n,) is integrated into the first mast portion (MA1), which has a motor (9) having a transmission (10) and a drive shaft (11), the drive shaft (11) being arranged vertically and the drive shaft (11) being connected to an adapter (12) on a flange (1) in a rotationally fixed manner, and the flange (1) being the lowest part of the further mast portion (5, MA2).

5. Vertical photovoltaic system according to any of claims 1 to 4,
**characterized in that** the PV system has an electromechanical controller for solar tracking, a control disc (14) being arranged between a housing (8) and the adapter (12) so as to be connected to the housing (8) in a rotationally fixed manner, the control disc (14) interacting with a vertical control element (15), as a result of which an up and down stroke (7) is produced and, by means of a pivot lever (7.1), a rotation about a variable angle of the shaft (4) takes place with the two axle stubs (4.1), which causes a pivoting of the PV modules (6) arranged symmetrically on both sides on the shaft stubs (4.1) about the shaft stubs (4.1), and the control disc (14) being pivotable in a guide (25) with two bearing pins (22) by means of an adjusting lever (23) and being adjusted and fastened in a slot (24).

6. Vertical photovoltaic system according to any of claims 1 to 5,
**characterized in that** the control disc (14) is horizontally displaceable for seasonal solar tracking, a pivoting device (21) being horizontally displaceable in a rotationally fixed manner in a guide (26) with a flat guide (27), the control disc (14) being synchronously displaced by a length "L", the control disc (14) generating different pivoting heights (7), specifically from plane "N" in position "C" to pivot height (7) "C1" and from position "D" to "D1", by horizontal displacement of the path "L", and the control element (15) defining a revolution in 24 hours around circle "N" (34), the control element (15) being arranged with at least one tubular element (2) with a radius y (18).

7. Vertical photovoltaic system according to any of claims 1 to 6,
**characterized in that,** in a bird's eye view, the control disc (14) represents a circular segment which is delimited in position "C" on 21 June each year and in position "D" on 21 December each year, the control element (15) leaving the control disc (14) from sunset to sunrise and the plane "N" being maintained by a stop (17), and the control element (15) moving upward in the direction of an apex "Sp" (35) in the circular segment of the control disc (14) and moving downward again after reaching the apex "Sp" (35), the contact with the control disc (14) taking place with a ball pressure bearing (19), which is arranged at the lower end of the control element (15).

8. Vertical photovoltaic system according to any of claims 1 to 7,
**characterized in that** the PV system has the torque limiting element (30) for limiting the wind load, which acts on the PV modules (6) with a torque (Md3), the PV modules (6) being arranged eccentrically (h1; h2) on the shaft stubs (4.1.) and the PV modules (6) being mounted and fastened so as to be pivotable about the shaft stubs (4.1), and the torque limiting element (30) being arranged between the rear side of the PV Module (6), with or without a carrier element (6.1), and the shaft stubs (4.1), which torque limiting element is formed from two torsion springs (32), one torsion spring (32) being preloaded in a clockwise direction and the other being preloaded in an anticlockwise direction and the PV Module (6) thus being fixed in position on the shaft stub (4.1), and one end of the spring being connected to the shaft stub (4.1) in a rotationally fixed manner in each case.

9. Vertical photovoltaic system according to any of claims 1 to 7,
**characterized in that** the PV system has the torque limiting element (30) for limiting the wind load, which acts on the PV modules (6) with a torque (Md3), the PV modules (6) being arranged centrally on the shaft stubs (4.1.) and the PV modules (6) being mounted so as to be pivotable about the shaft stubs (4.1) and being fastened at a predetermined elevation angle, and the torque limiting element (30) being arranged between the rear side of the PV Module (6) and the shaft stubs (4.1), which torque limiting element is formed from a torsion spring, one end of the spring being connected to the shaft stub (4.1) in a rotationally fixed manner.

10. Vertical photovoltaic system according to any of claims 1 to 9,
**characterized in that** the PV system has a further wind load limitation, the torques (Md1, Md2) of the PV modules (6) canceling each other out due to the symmetrical arrangement of the PV modules (6) on both sides on the shaft stub (4.1).

11. Vertical photovoltaic system according to any of claims 1 to 10,
**characterized in that** the longitudinal displacement "L" can be provided by hand in, for example, six steps forward and, in a further displacement, six steps back.

12. Vertical photovoltaic system according to any of claims 1 to 11,
**characterized in that** the mechanical controller has an automatic drive which maps the seasonal course of the sun, the drive shaft (11) having a control cam (39) which engages in an intermittent-motion mechanism with a cog wheel (40) once per day and rotates about certain angle, and a control pin (42) engaging in a stroke slot (43) and thus transforming the rotational movement into a longitudinal movement, the longitudinal movement corresponding to the stroke "L".

13. Vertical photovoltaic system according to any of claims 1 to 12,
**characterized in that** the connection of the lower flange (1) and the upper flange (1) of the further mast portion (2; 3; 4; n) is formed with at least three tubular members, a shaft (4) having two symmetrically arranged shaft stubs (4.1) being formed on the flange (1) in each case, the shaft (4) being connected to the shaft stub (4.1) in a rotationally fixed manner, and the shaft (4) or the shaft stubs (4.1) interacting with pivot lever (7.1) in a rotationally fixed manner.

14. Vertical photovoltaic system according to any of claims 1 to 13,
**characterized in that** in the first mast portion (5 MA1), the drive is integrated with the drive shaft (11).

15. Vertical photovoltaic system according to any of claims 1 to 14,
**characterized in that** after the height (G1) of the first mast portion (5 MA1) at the interface of the flange (1) with the second mast portion (5 MA 2) and the following mast portions (MA3, n), said system is arranged obliquely at an angle (Alpha).

## Revendications

1. Installation photovoltaïque verticale comportant un mât et au moins deux modules PV (6), au choix dans une configuration rigide ou avec un système de suivi du soleil à un axe ou avec un système de suivi du soleil à deux axes, dans laquelle l'installation photovoltaïque présente une première section de mât (5, MA1) qui est disposée de manière rigide, fixe en rotation et verticale, dans laquelle au moins une autre section de mât (MA2) est placée sur la section de mât (5 MA1) et dans laquelle l'autre section de mât (5 MA 2) présente au moins un arbre disposé horizontalement et équipé des deux côtés de manière symétrique d'au moins un module PV (6), et dans laquelle d'autres sections de mât (5 MA2,3,4,n,) sont placées verticalement ou obliquement avec un angle (Alpha 1;47) et dans laquelle l'angle (Alpha 1;47), vu depuis le soleil, est un angle (Alpha 1;47) de toujours plus de 90 degrés et dans laquelle les autres sections de mât (5 MA2,3,4,n,) peuvent être réalisées de manière à pouvoir pivoter dans leur extension longitudinale, dans laquelle la rotation suit l'évolution au cours de la journée du soleil, dans laquelle le module PV (6) est disposé de manière à pouvoir pivoter sur un bout d'arbre (4.1) et un élément de limitation de couple de rotation (30) est disposé entre le bout d'arbre (4.1) et le module PV (6), de sorte qu'à partir d'une charge de vent prédéfinie, le module PV (6) tourne horizontalement autour du bout d'arbre (4.1) dans le vent.

2. Installation photovoltaïque verticale selon la revendication 1,
**caractérisée en ce que** le mât est constitué de plusieurs sections de mât (MA 5 2,3,4,) et dans laquelle une bride (1) est disposée au niveau des interfaces des sections de mât, laquelle bride possède un palier horizontal pour un arbre (4), dans laquelle l'arbre (4) fait saillie des deux côtés de manière symétrique et reçoit avec le bout d'arbre (4.1) respectivement au moins un module PV (6) qui est monté de manière à pouvoir pivoter sur le bout d'arbre (4.1) et fixé à celui-ci, dans laquelle le module PV (6) est monté de manière asymétrique par rapport à l'axe de rotation du bout d'arbre (4.1) et dans laquelle la hauteur de section de mât (48) peut être réalisée de manière à pouvoir varier.

3. Installation photovoltaïque verticale selon la revendication 1 ou 2,
**caractérisée en ce que** l'autre section de mât (MA 5 ; 2) comprend toutes les autres sections de mât (MA 5; 3, 4, n) et le mât peut être réalisé d'une seule pièce ou en plusieurs pièces, dans laquelle l'extension longitudinale respective est réalisée d'une seule pièce, dans laquelle l'autre section de mât (MA 5;2) est reliée de manière fixe à un arbre d'entraînement (11) au niveau d'un adaptateur (12), les autres sections de mât (MA 5;2;3;n) respectives sont formées par une fixation horizontale correspondante de l'arbre (4) avec au moins deux hauteurs de section de mât (48) et la hauteur de section de mât (48) peut être réalisée de manière à pouvoir varier.

4. Installation photovoltaïque verticale selon l'une des revendications 1 à 3, **caractérisée en ce que** l'entraînement pour la rotation des autres sections de mât (5, MA 2,3,4,n,) est intégré dans la première section de mât (MA1), lequel entraînement présente un moteur (9) comportant un engrenage (10) et un arbre d'entraînement (11), dans laquelle l'arbre d'entraînement (11) est disposé verticalement et dans laquelle l'arbre d'entraînement (11) est relié de manière solidaire en rotation à un adaptateur (12) au niveau d'une bride (1) et la bride (1) est la partie la plus basse de l'autre section de mât (5, MA2).

5. Installation photovoltaïque verticale selon l'une des revendications 1 à 4, **caractérisée en ce que** l'installation PV possède un système de commande électromécanique pour le suivi du soleil, dans laquelle un disque de commande (14) est disposé entre un boîtier (8) et l'adaptateur (12) et est relié de manière solidaire en rotation au boîtier (8), dans laquelle le disque de commande (14) coopère avec un élément de commande (15) vertical, moyennant quoi une montée et une descente (7) sont générées et une rotation d'un angle variable de l'arbre (4) avec les deux bouts d'arbre (4.1) est effectuée par l'intermédiaire d'un levier pivotant (7.1), laquelle rotation provoque un pivotement des modules PV (6), disposés des deux côtés de manière symétrique sur le bout d'arbre (4.1), autour du bout d'arbre (4.1), et dans laquelle le disque de commande (14) peut être pivoté dans un guide (25) comportant deux tourillons (22) avec un levier d'ajustement (23) et est ajusté et fixé dans une coulisse (24).

6. Installation photovoltaïque verticale selon l'une des revendications 1 à 5, **caractérisée en ce que** le disque de commande (14) peut être déplacé horizontalement pour le suivi saisonnier du soleil, dans laquelle un dispositif de pivotement (21) peut être déplacé horizontalement et de manière solidaire en rotation dans un guide (26) comportant un guide plat (27), dans laquelle le disque de commande (14) se déplace de manière synchrone d'une longueur « L », dans laquelle le disque de commande (14) produit différentes hauteurs de pivotement (7) par le déplacement horizontal du parcours « L », à savoir du plan « N » dans la position « C » à la hauteur de pivotement (7,) « C1 » et de la position « D » à « D1 » et l'élément de commande (15) décrit une rotation du cercle « N » (34) en 24 heures, dans laquelle l'élément de commande (15) est disposé avec au moins un élément tubulaire (2) de rayon y (18).

7. Installation photovoltaïque verticale selon l'une des revendications 1 à 6, **caractérisée en ce que** le disque de commande (14) représente, en vue aérienne, un segment de cercle limité dans la position « C » le 21 juin de chaque année et dans la position « D » le 21 décembre de chaque année, et dans laquelle l'élément de commande (15) quitte le disque de commande (14) du coucher du soleil jusqu'au lever du soleil et le plan « N » est ainsi maintenu par la butée (17), et dans laquelle l'élément de commande (15) se déplace vers le haut dans le segment circulaire du disque de commande (14) en direction du sommet « Sp » (35) et se déplace de nouveau vers le bas après avoir atteint le sommet « Sp » (35), dans laquelle le contact avec le disque de commande (14) a lieu avec un palier de butée à billes (19) disposé au niveau de l'extrémité inférieure de l'élément de commande (15).

8. Installation photovoltaïque verticale selon l'une des revendications 1 à 7, **caractérisée en ce que** l'installation PV possède l'élément de limitation de couple de rotation (30) pour la limitation de la charge de vent agissant sur les modules PV (6) avec un couple de rotation (Md3), dans laquelle les modules PV (6) sont disposés de manière excentrée (h1; h2) sur le bout d'arbre (4.1.) et dans laquelle les modules PV (6) sont montés de manière à pouvoir pivoter autour du bout d'arbre (4.1) et fixés à celui-ci et dans laquelle l'élément de limitation de couple de rotation (30) est disposé entre la face arrière du module PV (6), avec ou sans élément de support (6.1), et les bouts d'arbre (4.1), lequel élément de limitation de couple de rotation est formé de deux ressorts à branches (32), dans laquelle un ressort à branches (32) est précontraint de manière à pivoter vers la droite et l'autre ressort à branches est précontraint de manière à pivoter vers la gauche et par conséquent, le module PV (6) est fixé en position sur le bout d'arbre (4.1), et dans laquelle respectivement une extrémité du ressort est reliée de manière solidaire en rotation au bout d'arbre (4.1).

9. Installation photovoltaïque verticale selon l'une des revendications 1 à 7, **caractérisée en ce que** l'installation PV possède l'élément de limitation de couple de rotation (30) pour la limitation de la charge de vent agissant sur les modules PV (6) avec un couple de rotation (Md3), dans laquelle les modules PV (6) sont disposés au centre sur le bout d'arbre (4.1.) et dans laquelle les modules PV (6) sont montés de manière à pouvoir pivoter autour du bout d'arbre (4.1) et sont fixés selon un angle d'élévation prédéfini et dans laquelle l'élément de limitation de couple de rotation (30) est disposé entre la face arrière du module PV (6) et le bout d'arbre (4.1), lequel élément de limitation de couple de rotation est formé par un ressort à branches, dans laquelle une extrémité du ressort est reliée de manière solidaire en rotation au bout d'arbre (4.1).

10. Installation photovoltaïque verticale selon l'une des revendications 1 à 9, **caractérisée en ce que** l'installation PV possède un autre système de limitation de la charge de vent, dans laquelle les couples de rotation (Md1, Md2) des modules PV (6) s'annulent mutuellement par la disposition symétrique des modules PV (6) des deux côtés sur le bout d'arbre (4.1).

11. Installation photovoltaïque verticale selon l'une des revendications 1 à 10, **caractérisée en ce que** le réglage longitudinal « L » peut être effectué manuellement, par exemple par six pas en avant et, dans un autre réglage, par six pas en arrière.

12. Installation photovoltaïque verticale selon l'une des revendications 1 à 11, **caractérisée en ce que** le système de commande mécanique possède un entraînement automatique qui reproduit l'évolution saisonnière du soleil, dans laquelle l'arbre d'entraînement (11) possède une came de commande (39) qui vient en prise quotidiennement une fois dans un engrenage pas à pas comportant une roue dentée (40) et pivote d'un angle donné, et dans laquelle un goujon de commande (42) vient en prise dans une coulisse de levage (43) et transforme ainsi le mouvement de rotation en un mouvement longitudinal, dans laquelle le mouvement longitudinal correspond à la course « L ».

13. Installation photovoltaïque verticale selon l'une des revendications 1 à 12, **caractérisée en ce que** la liaison de la bride inférieure (1) et de la bride supérieure (1) avec l'autre section de mât (2; 3; 4; n) est réalisée avec au moins trois éléments tubulaires, dans laquelle respectivement un arbre (4) comportant deux bouts d'arbre (4.1) disposés de manière symétrique est réalisé sur la bride (1), dans laquelle l'arbre (4) est relié de manière solidaire en rotation au bout d'arbre (4.1) et dans laquelle l'arbre (4) ou le bout d'arbre (4.1) coopère de manière solidaire en rotation avec le levier pivotant (7.1).

14. Installation photovoltaïque verticale selon l'une des revendications 1 à 13, **caractérisée en ce que** l'entraînement est intégré avec l'arbre d'entraînement (11) dans la première section de mât (5 MA1).

15. Installation photovoltaïque verticale selon l'une des revendications 1 à 14, **caractérisée en ce que** celle-ci est disposée de manière inclinée selon un angle (Alpha) à hauteur (G1) de la première section de mât (5 MA1), au niveau de l'interface de la bride (1) avec la seconde section de mât (5 MA 2) et les sections de mât suivantes (MA3,4, n).
